# EUROPEAN PATENT APPLICATION

(11) **EP 4 576 849 A1**
(43) Date of publication of application: **25.06.2025**
(21) Application number: 23864436.3
(22) Date of filing: 29.06.2023
(51) Int. Cl.: H04W 8/02

(54) **COMMUNICATION METHOD AND APPARATUS**

(30) Priority: 16.09.2022 CN 202211128523
(71) Applicant: Huawei Technologies Co., Ltd., Shenzhen, Guangdong 518129 (CN)
(72) Inventor: ZHOU, Xiaoyun, Shenzhen, Guangdong 518129 (CN); ZONG, Zaifeng, Shenzhen, Guangdong 518129 (CN); LIAO, Ting, Shenzhen, Guangdong 518129 (CN)
(74) Representative: Isarpatent
(86) International application number: PCT/CN2023/104063
(87) International publication number: WO 2024/055697

(57) **Abstract**

This application provides a communication method and an apparatus. Because a relay device may communicate with a core network element via a first radio access network device, the relay device may obtain an identifier of a terminal device in a coverage area of the relay device, and send the identifier to a first access and mobility management function network element via the first radio access network device. In this way, in a scenario in which indoor coverage of a 5G network is weak and a scenario in which an uplink signal of an RFID terminal device is weak, communication between the terminal device and a network device can be implemented, and in a large-coverage, large-scale, and large-range scenario, the communication between the terminal device and the network device is also implemented.

## Description

This application claims priority to Chinese Patent Application No. 202211128523.5, filed with the China National Intellectual Property Administration on September 16, 2022 and entitled "COMMUNICATION METHOD AND APPARATUS", which is incorporated herein by reference in its entirety.

### TECHNICAL FIELD

Embodiments of this application relate to the communication field, and more specifically, to a communication method and an apparatus.

### BACKGROUND

A radio frequency identification (radio frequency identification, RFID) technology is a non-contact automatic identification technology, and an RFI terminal device is a typical internet of things terminal device. An RFID system usually includes a reader/writer, an RFID identifier, and an application management system. When the RFID tag is close to the reader/writer, the RFID tag may receive a radio frequency signal sent by the reader/writer, generate an induced current, and obtain energy. The RFID may send information to the reader/writer by using the harvested energy, to implement communication with the reader/writer. The RFID technology is widely used in product production, logistics, sales and other links.

However, the RFID technology can be used only in a scenario with a small range and scale. In a large-scale and large-coverage scenario, for example, in some long-distance scenarios, if the foregoing technology is still used, not only costs are increased, but also a communication effect is poor. Therefore, in consideration of a large-scale, large-range, and large-coverage scenario, how a passive terminal device should communicate with a network device becomes a technical problem that needs to be resolved.

### SUMMARY

This application provides a communication method. Because a relay device may communicate with a core network element via a first radio access network device, the relay device may obtain an identifier of a terminal device in a coverage area of the relay device, and send the identifier to a first access and mobility management function network element via the first radio access network device. In this way, in a scenario in which indoor coverage of a 5G network is weak and a scenario in which an uplink signal of an RFID terminal device is weak, communication between the terminal device and a network device can be implemented, and in a large-coverage, large-scale, and large-range scenario, the communication between the terminal device and the network device is also implemented.

According to a first aspect, a communication method is provided. The method may be performed by a relay device, or may be performed by a component (for example, a chip or a circuit) of the relay device. This is not limited.

The method includes: The relay device receives a first non-access stratum message from a first access and mobility management function network element via a first radio access network device, where the first non-access stratum message is used to request to obtain an identifier of a terminal device, and the terminal device includes one or more terminal devices. The relay device sends radio frequency information to terminal devices in a coverage area of the relay device based on the first non-access stratum message, where the radio frequency information is used to provide an excitation signal for the terminal devices. The relay device receives a second non-access stratum message from a first terminal device, where the second non-access stratum message carries an identifier of the first terminal device, and the first terminal device is a terminal device that successfully performs random access and that is in the terminal devices in the coverage area of the relay device. The relay device sends the second non-access stratum message to the first access and mobility management function network element via the first radio access network device.

It should be noted that the "terminal device" mentioned in this application may be understood as, for example, an internet of things terminal device. Specifically, it may be understood as a "passive internet of things (Passive IoT) device", which is also referred to as an "ambient internet of things (Ambient IoT) terminal device". For example, the internet of things terminal device may be a passive RFID, a semi-passive RFID, or the like.

In a possible implementation, the method further includes: The relay device sends a first radio resource control message to the first radio access network device, where the first radio resource control message carries a registration request message and first indication information, the first indication information indicates that the relay device supports communication with the ambient internet of things terminal device, and the registration request message is used to request to register with an access and mobility management function network element. The first access and mobility management function network element is an access and mobility management function network element that is selected by the first radio access network device for the relay device based on the first indication information and that supports communication with the ambient internet of things terminal device.

According to the foregoing technical solution, in this application, the first indication information is carried when the relay device registers with a core network, and the indication information indicates that the relay device supports communication with the terminal device (for example, the terminal device is the ambient internet of things terminal device). Therefore, the first radio access network device may select the first access and mobility management function network element for the relay device, and subsequently, the first radio access network device sends any message sent by the relay device to an access and mobility management function network element to the first access and mobility management function network element. This can facilitate inventory and management that are performed by the first access and mobility management function network element on the terminal device.

In a possible implementation, the method further includes: The relay device receives a third non-access stratum message from the first access and mobility management function network element via the first radio access network device, where the third non-access stratum message carries second indication information, and the second indication information indicates to perform a target operation on the first terminal device. The relay device sends the third non-access stratum message to the first terminal device. The relay device receives a fourth non-access stratum message from the first terminal device, where the fourth non-access stratum message carries information about an execution result corresponding to the target operation performed on the first terminal device. The relay device sends the fourth non-access stratum message to the first access and mobility management function network element via the first radio access network device.

In this application, the "target operation" may include at least one of the following: a read operation, a write operation, an access operation, a kill operation, a lock operation, a block write operation, a block erase operation, or the like.

According to the foregoing technical solution, in this application, the first access and mobility management function network element may obtain the identifier of the terminal device, and indicate to perform the target operation on the first terminal device, to implement the inventory on the terminal device. In other words, according to the technical solution provided in this application, communication between the terminal device and a network device can be implemented in a large-coverage, large-scale, and large-range scenario.

In a possible implementation, the method further includes: The relay device receives third indication information from the first access and mobility management function network element via the first radio access network device, where the third indication information indicates at least one of the following content: indicates that the target operation is completed on the first terminal device, indicates to query for an identifier of a next terminal device, or indicates the terminal device to perform a next random access procedure. The relay device receives a fifth non-access stratum message from a second terminal device, where the fifth non-access stratum message carries an identifier of the second terminal device. The relay device sends the fifth non-access stratum message to the first access and mobility management function network element via the first radio access network device.

It should be noted that, in this application, the second terminal device is different from the first terminal device, and the second terminal device is another terminal device that successfully performs random access and that is in the terminal devices in the coverage area of the relay device.

According to the foregoing technical solution, in this application, when determining that inventory on the first terminal device is completed, the first access and mobility management function network element may indicate the relay device to obtain the identifier of the second terminal device, and perform inventory on the second terminal device, to complete inventory on the terminal devices in the coverage area of the relay device.

In a possible implementation, the first non-access stratum message carries at least one of the following content: a value interval of the identifier of the terminal device, an identifier list of the terminal device, an identifier of a group of the terminal device, an identifier of an application, an identifier of an enterprise user, or information indicating to query for any terminal device.

According to the foregoing technical solution, in this application, an application function network element may further send an inventory object to the first access and mobility management function network element, to indicate that the inventory needs to be performed on the terminal device.

In a possible implementation, the method further includes: The relay device performs a handover from the first radio access network device to a second radio access network device. The relay device sends a second radio resource control message to the second radio access network device, where the second radio resource control message carries the registration request message and the first indication information, the first indication information indicates that the relay device supports the communication with the ambient internet of things terminal device, and the registration request message is used to request to register with the access and mobility management function network element. The relay device receives a registration accept message from a second access and mobility management function network element, where the second access and mobility management function network element is an access and mobility management function network element that is selected by the second radio access network device for the relay device based on the first indication information after the relay device is handed over from the first radio access network device to the second radio access network device and that supports communication with the ambient internet of things terminal device.

According to the foregoing technical solution, in this application, it is further considered that a location of the relay device moves in an inventory process. In this case, the relay device may switch the radio access network device and the access and mobility management function network element, and a target access and mobility management function network element may obtain context information of the relay device from a source access and mobility management function network element, so that a core network element (for example, the second access and mobility management function network element) can continue to perform inventory on the terminal device. In this way, the communication between the terminal device and the network device can be implemented in the large-coverage scenario.

According to a second aspect, a communication method is provided. The method may be performed by a radio access network device, or may be performed by a component (for example, a chip or a circuit) of the radio access network device. This is not limited.

The method includes: A first radio access network device receives a first radio resource control message from a relay device, where the first radio resource control message carries a registration request message and first indication information, the first indication information indicates that the relay device supports communication with an ambient internet of things terminal device, and the registration request message is used to request to register with an access and mobility management function network element. The first radio access network device selects, for the relay device based on the first indication information, a first access and mobility management function network element that supports communication with the ambient terminal device. The first radio access network device sends the registration request message to the first access and mobility management function network element.

In a possible implementation, the first radio access network device receives a first non-access stratum message from the first access and mobility management function network element, where the first non-access stratum message is used to request to obtain an identifier of a terminal device, and the terminal device includes one or more terminal devices. The first radio access network device sends the first non-access stratum message to the relay device. The first radio access network device receives a second non-access stratum message from the relay device, where the second non-access stratum message carries an identifier of a first terminal device, and the first terminal device is a terminal device that successfully performs random access and that is in terminal devices in a coverage area of the relay device. The first radio access network device determines to send the second non-access stratum message to the first access and mobility management function network element.

According to the foregoing technical solution, in this application, the first indication information is carried when the relay device registers with a core network, and the indication information indicates that the relay device supports communication with the terminal device. Therefore, the first radio access network device may select the first access and mobility management function network element for the relay device, and subsequently, the first radio access network device sends any message sent by the relay device to an access and mobility management function network element to the first access and mobility management function network element. This can facilitate inventory and management that are performed by the first access and mobility management function network element on the terminal device.

According to a third aspect, a communication method is provided. The method may be performed by a first access and mobility management function network element, or may be performed by a component (for example, a chip or a circuit) of the first access and mobility management function network element. This is not limited.

Beneficial effects that correspond to a technical solution on a network side and that are the same as those on a relay device side and a first radio access network device side are not described again.

The method includes: The first access and mobility management function network element receives a seventh non-access stratum message from a first network element, where the seventh non-access stratum message is used to request to obtain an identifier of a terminal device, the seventh non-access stratum message carries an identifier of a relay device, and the terminal device includes one or more terminal devices. The first access and mobility management function network element sends a first non-access stratum message to the relay device based on the identifier of the relay device, where the first non-access stratum message is used to request to obtain the identifier of the terminal device. The first access and mobility management function network element receives a second non-access stratum message from a first terminal device via the relay device, where the second non-access stratum message carries an identifier of the first terminal device, and the first terminal device is a terminal device that successfully performs random access and that is in terminal devices in a coverage area of the relay device. The first access and mobility management function network element sends an eighth non-access stratum message to the first network element, where the eighth non-access stratum message carries the identifier of the first terminal device.

According to the foregoing technical solution, in this application, the first access and mobility management function network element may send the first non-access stratum message to the relay device, so that the relay device obtains an identifier of the terminal device in the coverage area of the relay device. In this way, communication between the terminal device and a network device is implemented in a large-coverage, large-range, and large-scale scenario.

In a possible implementation, that the first access and mobility management function network element receives a second non-access stratum message from a first terminal device via the relay device includes: The first access and mobility management function network element receives the second non-access stratum message from the first terminal device via the relay device and a first radio access network device, where the first access and mobility management function network element is an access and mobility management function network element that is selected by the first radio access network device for the relay device and that supports communication with an ambient internet of things terminal device.

According to the foregoing technical solution, in this application, the first radio access network device may send a message sent by the relay device to an access and mobility management function network element to the first access and mobility management function network element. This facilitates inventory performed by the first access and mobility management function network element on the terminal device.

In a possible implementation, the seventh non-access stratum message further carries second indication information, the second indication information indicates to perform a target operation on the first terminal device, and the method further includes: The first access and mobility management function network element sends a third non-access stratum message to the relay device, where the third non-access stratum message carries the second indication information. The first access and mobility management function network element receives a fourth non-access stratum message from the relay device, where the fourth non-access stratum message carries information about an execution result corresponding to the target operation performed on the first terminal device.

In a possible implementation, the method further includes: The first access and mobility management function network element sends third indication information to the relay device, where the third indication information indicates at least one of the following content: indicates that the target operation is completed on the first terminal device, indicates to query for an identifier of a next terminal device, or indicates the terminal device to perform a next random access procedure. The first access and mobility management function network element receives a fifth non-access stratum message from a second terminal device via the relay device, where the fifth non-access stratum message carries an identifier of the second terminal device.

In a possible implementation, the method further includes: The first access and mobility management function network element receives fourth indication information from the relay device, where the fourth indication information indicates that a target operation is completed on the terminal device, and the eighth non-access stratum message further carries information about an execution result corresponding to the target operation performed on the terminal device.

In a possible implementation, the method further includes: The first access and mobility management function network element sends context information of the relay device to a second access and mobility management function network element, where the context information includes the seventh non-access stratum message, and the second access and mobility management function network element is an access and mobility management function network element that is selected by a second radio access network device for the relay device after the relay device is handed over from the first radio access network device to the second radio access network device and that supports communication with the ambient internet of things terminal device.

According to a fourth aspect, a communication method is provided. The method may be performed by a relay device, or may be performed by a component (for example, a chip or a circuit) of the relay device. This is not limited.

The method includes: The relay device receives a first non-access stratum message from a fourth access and mobility management function network element via a first radio access network device, where the first non-access stratum message is used to request to obtain an identifier of a terminal device, and the terminal device includes one or more terminal devices. The relay device sends radio frequency information to terminal devices in a coverage area of the relay device based on the first non-access stratum message, where the radio frequency information is used to provide an excitation signal for the terminal devices. The relay device receives a second non-access stratum message from a first terminal device, where the second non-access stratum message carries an identifier of the first terminal device, and the first terminal device is a terminal device that successfully performs random access and that is in the terminal devices in the coverage area of the relay device. The relay device sends the second non-access stratum message to a third access and mobility management function network element via the first radio access network device.

According to the foregoing technical solution, in this application, the relay device may interact with different access and mobility management function network elements, so that the relay device can report the identifier of the terminal device to the access and mobility management function network elements. In this way, communication between the terminal device and a network device is implemented in a large-coverage, large-scale, and large-range scenario.

In a possible implementation, the method further includes: The relay device receives a third non-access stratum message from the third access and mobility management function network element via the first radio access network device, where the third non-access stratum message carries second indication information, and the second indication information indicates to perform a target operation on the first terminal device. The relay device sends the third non-access stratum message to the first terminal device. The relay device receives a fourth non-access stratum message from the first terminal device, where the fourth non-access stratum message carries information about an execution result corresponding to the target operation performed on the first terminal device. The relay device sends the fourth non-access stratum message to the third access and mobility management function network element via the first radio access network device.

In a possible implementation, the method further includes: The relay device receives third indication information from the fourth access and mobility management function network element via the first radio access network device, where the third indication information indicates at least one of the following content: indicates that the target operation is completed on the first terminal device, indicates to query for an identifier of a next terminal device, or indicates the terminal device to perform a next random access procedure. The relay device receives a fifth non-access stratum message from a second terminal device, where the fifth non-access stratum message carries an identifier of the second terminal device. The relay device sends the fifth non-access stratum message to the third access and mobility management function network element via the first radio access network device.

According to the foregoing technical solution, in this application, the relay device may send, to the network device, the information about the execution result corresponding to the target operation performed on the terminal device, obtain the identifier of the next terminal device based on an indication of the network device, and start to perform inventory on the next terminal device. In other words, in the large-coverage scenario, the network device may complete inventory on all terminal devices.

According to a fifth aspect, a communication method is provided. The method may be performed by a fourth access and mobility management function network element, or may be performed by a component (for example, a chip or a circuit) of the fourth access and mobility management function network element. This is not limited. Alternatively, the method may be performed by a third access and mobility management function network element, or may be performed by a component (for example, a chip or a circuit) of the third access and mobility management function network element. This is not limited.

The method includes: The fourth access and mobility management function network element receives a seventh non-access stratum message from a second network element, where the seventh non-access stratum message is used to request to obtain an identifier of a terminal device, the seventh non-access stratum message carries an identifier of a relay device, and the terminal device includes one or more terminal devices. The fourth access and mobility management function network element sends a first non-access stratum message to the relay device based on the identifier of the relay device, where the first non-access stratum message is used to request to obtain the identifier of the terminal device. The third access and mobility management function network element receives a second non-access stratum message from a first terminal device via the relay device, where the second non-access stratum message carries an identifier of the first terminal device, and the first terminal device is a terminal device that successfully performs random access and that is in terminal devices in a coverage area of the relay device. The third access and mobility management function network element sends the second non-access stratum message to the second network element.

According to the foregoing technical solution, in this application, because the relay device may communicate with a core network element via a radio access network device and the access and mobility management function network element, the relay device may obtain an identifier of the terminal device in the coverage area of the relay device, and send the identifier to the second network element via the access and mobility management function network element, and the second network element may implement inventory on the terminal device. In this way, communication between the terminal device and a network device is implemented in a large-coverage, large-scale, and large-range scenario.

In a possible implementation, the fourth access and mobility management function network element is an access and mobility management function network element that supports communication with the relay device.

In a possible implementation, if the seventh non-access stratum message carries an inventory identifier, the first non-access stratum message carries the inventory identifier, and the second non-access stratum message carries the inventory identifier, where the inventory identifier is used by the second network element to determine that the second non-access stratum message is a response message corresponding to the seventh non-access stratum message.

According to the foregoing technical solution, in this application, the second network element sends the inventory identifier to the fourth access and mobility management function network element. Subsequently, provided that the second non-access stratum message received by the second network element from the third access and mobility management function network element carries the inventory identifier, the second network element may determine that the message is the response message of the seventh non-access stratum message.

In a possible implementation, the seventh non-access stratum message further carries second indication information, the second indication information indicates to perform a target operation on the first terminal device, and the method further includes: The fourth access and mobility management function network element receives a third non-access stratum message from the second network element, where the third non-access stratum message carries the second indication information. The fourth access and mobility management function network element sends the third non-access stratum message to the first terminal device via the relay device, where the third non-access stratum message carries the second indication information. The third access and mobility management function network element receives a fourth non-access stratum message from the first terminal device via the relay device, where the fourth non-access stratum message carries information about an execution result corresponding to the target operation performed on the first terminal device. The third access and mobility management function network element sends the fourth non-access stratum message to the second network element.

In a possible implementation, the method further includes: The fourth access and mobility management function network element sends third indication information to the relay device, where the third indication information indicates at least one of the following content: indicates that the target operation is completed on the first terminal device, indicates to query for an identifier of a next terminal device, or indicates the terminal device to perform a next random access procedure. The fourth access and mobility management function network element receives a fifth non-access stratum message from a second terminal device via the relay device, where the fifth non-access stratum message carries an identifier of the second terminal device.

In a possible implementation, the method further includes: The fourth access and mobility management function network element receives fourth indication information from the relay device, where the fourth indication information indicates that a target operation is completed on the terminal device. The fourth access and mobility management function network element sends a ninth non-access stratum message to the second network element, where the ninth non-access stratum message includes information about an execution result corresponding to the target operation performed on the terminal device.

In a possible implementation, the fourth access and mobility management function network element is connected to a first radio access network device, the first radio access network device provides a service for the relay device, and the method further includes: The fourth access and mobility management function network element sends context information of the relay device to a second access and mobility management function network element, where the context information includes the seventh non-access stratum message, and the second access and mobility management function network element is a target access and mobility management function network element selected by a second radio access network device for the relay device after the relay device is handed over from the first radio access network device to the second radio access network device. The second access and mobility management function network element receives a sixth non-access stratum message from the relay device, where the sixth non-access stratum message carries an identifier of a third terminal device and the inventory identifier, and the inventory identifier is used by the second network element to determine that the second non-access stratum message is the response message corresponding to the seventh non-access stratum message.

In this application, the third terminal device is different from the first terminal device and the second terminal device, and the third terminal device is another terminal device that successfully performs random access and that is in the terminal devices in the coverage area of the relay device.

According to a sixth aspect, a communication method is provided. The method may be performed by a tag management function network element, or may be performed by a component (for example, a chip or a circuit) of the tag management function network element. This is not limited.

The method includes: A second network element receives a tenth non-access stratum message from an application function network element, where the tenth non-access stratum message is used to request to obtain an identifier of a terminal device, the tenth non-access stratum message carries an identifier of a relay device, and the terminal device includes one or more target terminal devices. The second network element determines, based on the identifier of the relay device, that an access and mobility management function network element serving the relay device is a fourth access and mobility management function network element. The second network element sends a seventh non-access stratum message to the fourth access and mobility management function network element, where the seventh non-access stratum message is used to request to obtain the identifier of the terminal device. The second network element receives a second non-access stratum message from a third access and mobility management function network element, where the second non-access stratum message carries an identifier of a first terminal device, and the first terminal device is a terminal device that successfully performs random access and that is in terminal devices in a coverage area of the relay device.

According to the foregoing technical solution, in this application, because the relay device may communicate with a core network element via a radio access network device and the access and mobility management function network element, the relay device may obtain an identifier of the terminal device in the coverage area of the relay device, and send the identifier to the second network element via the access and mobility management function network element, and the second network element may implement inventory on the terminal device. In this way, communication between the terminal device and a network device is implemented in a large-coverage, large-scale, and large-range scenario.

In a possible implementation, if the seventh non-access stratum message carries an inventory identifier, and the second non-access stratum message carries the inventory identifier, the method further includes: The second network element determines, based on the inventory identifier, that the second non-access stratum message is a response message corresponding to the seventh non-access stratum message.

In a possible implementation, the tenth non-access stratum message further carries inventory indication information, and the inventory indication information includes at least one of the following content: a value interval of the identifier of the terminal device, an identifier list of the terminal device, an identifier of a group of the terminal device, or information indicating to query for an identifier of any terminal device. The method further includes: If the second network element determines that the identifier of the first terminal device meets at least one of the indication information, the second network element determines that the second non-access stratum message is the response message corresponding to the seventh non-access stratum message.

According to the foregoing technical solution, in this application, the second network element may determine, based on the inventory identifier or the inventory indication information (which may alternatively be understood as an "inventory object"), whether the second non-access stratum message from the third access and mobility management function network element is the response message of the seventh non-access stratum message. In other words, according to the technical solution provided in this application, the second network element may implement the inventory on the terminal device.

In a possible implementation, the tenth non-access stratum message further carries second indication information, the second indication information indicates to perform a target operation on the first terminal device, and the method further includes: The second network element sends a third non-access stratum message to the fourth access and mobility management function network element, where the third non-access stratum message carries the second indication information. The second network element receives a fourth non-access stratum message from the third access and mobility management function network element, where the fourth non-access stratum message carries information about an execution result corresponding to the target operation of the first terminal device, and the fourth non-access stratum message is sent by the first terminal device to the third access and mobility management function network element via the relay device.

**In** a possible implementation, the method further includes: The second network element sends third indication information to the fourth access and mobility management function network element, where the third indication information indicates at least one of the following content: indicates that the target operation is completed on the first terminal device, indicates to query for an identifier of a next terminal device, or indicates the terminal device to perform a next random access procedure. The second network element receives a fifth non-access stratum message from the third access and mobility management function network element, where the fifth non-access stratum message carries an identifier of a second terminal device, and the fifth non-access stratum message is sent by the second terminal device to the third access and mobility management function network element via the relay device.

**In** a possible implementation, the method further includes: The second network element receives a ninth non-access stratum message from the fourth access and mobility management function network element, where the ninth non-access stratum message includes information about an execution result corresponding to the target operation performed on the terminal.

According to a seventh aspect, a communication apparatus is provided. The apparatus is configured to perform the method in any one of the possible implementations of the first aspect to the sixth aspect. Specifically, the apparatus may include a unit and/or a module configured to perform the method in any one of the possible implementations of the first aspect to the sixth aspect, for example, a transceiver unit and/or a processing unit.

**In** an implementation, the apparatus is a communication device (for example, a relay device, a first access and mobility management function network element, a fourth access and mobility management function network element, or a tag management function network element). When the apparatus is the communication device, a communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in the communication device (for example, the relay device, the first access and mobility management function network element, the fourth access and mobility management function network element, or the tag management function network element). When the apparatus is the chip, the chip system, or the circuit used in the communication device, a communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighth aspect, a communication apparatus is provided. The apparatus includes at least one processor, configured to execute a computer program or instructions stored in a memory, to perform the method in any one of the possible implementations of the first aspect and the sixth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a relay device.

In another implementation, the apparatus is a chip, a chip system, or a circuit used in the relay device.

In an implementation, the apparatus is a first access and mobility management function network element.

In another implementation, the apparatus is a chip, a chip system, or a circuit used in the first access and mobility management function network element.

In an implementation, the apparatus is a fourth access and mobility management function network element.

In another implementation, the apparatus is a chip, a chip system, or a circuit used in the fourth access and mobility management function network element.

In an implementation, the apparatus is a tag management function network element.

In another implementation, the apparatus is a chip, a chip system, or a circuit used in the tag management function network element.

According to a ninth aspect, this application provides a processor, including an input circuit, an output circuit, and a processing circuit. The processing circuit is configured to: receive a signal through the input circuit and transmit a signal through the output circuit, to enable the processor to perform the method in any one of the possible implementations of the first aspect to the sixth aspect.

In a specific implementation process, the processor may be one or more chips, the input circuit may be an input pin, the output circuit may be an output pin, and the processing circuit may be a transistor, a gate circuit, a trigger, any type of logic circuit, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this embodiment of this application.

Operations such as sending and obtaining/receiving related to the processor may be understood as operations such as output and receiving or input of the processor, or may be understood as operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a processing device is provided, and includes a processor and a memory. The processor is configured to: read instructions stored in the memory, receive a signal through a transceiver, and transmit a signal through a transmitter, to perform the method in any one of the possible implementations of the first aspect to the sixth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into a same chip, or may be separately disposed on different chips. A type of the memory and a manner of disposing the memory and the processor are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing device in the tenth aspect may be one or more chips. The processor in the processing device may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to an eleventh aspect, a computer-readable storage medium is provided. The computer-readable medium stores program code to be executed by a device, and the program code is for performing the method in any one of the possible implementations of the first aspect to the sixth aspect.

According to a twelfth aspect, a computer program product including instructions is provided. When the computer program product runs on a computer, the computer is enabled to perform the method in any one of the possible implementations of the first aspect to the sixth aspect.

According to a thirteenth aspect, a communication system is provided. The communication system includes a relay device, a first access and mobility management function network element, and a first radio access network device. The relay device is configured to perform the method in any one of the possible implementations of the first aspect. The first radio access network device is configured to perform the method in any one of the possible implementations of the second aspect. The first access and mobility management function network element is configured to perform the method in any one of the possible implementations of the third aspect.

According to a fourteenth aspect, a communication system is provided. The communication system includes a third access and mobility management function network element, a fourth access and mobility management function network element, and a tag management function network element. The third access and mobility management function network element and the fourth access and mobility management function network element are configured to perform the method corresponding to the third access and mobility management function network element and the fourth access and mobility management function network element in any one of the possible implementations of the fifth aspect. The tag management function network element is configured to perform the method in any one of the possible implementations of the sixth aspect.

In a possible implementation, the system further includes a relay device, and the relay device is configured to perform the method in any one of the possible implementations of the fourth aspect.

### BRIEF DESCRIPTION OF DRAWINGS

FIG. 1 is a diagram of a system architecture applicable to this application;
FIG. 2 is a diagram of an RFID system architecture;
FIG. 3 is a block diagram of a proximity service technology in a 5G system;
FIG. 4 is a diagram of two communication system architectures according to this application;
FIG. 5 is a schematic flowchart of a communication method 500 according to this application;
FIG. 6 is a schematic flowchart of a communication method 600 according to this application;
FIG. 7 is a schematic flowchart of a communication method 700 according to this application;
FIG. 8A and FIG. 8B are a schematic flowchart of a communication method 800 according to this application;
FIG. 9A and FIG. 9B are a schematic flowchart of a communication method 900 according to this application;
FIG. 10A and FIG. 10B are a schematic flowchart of a communication method 1000 according to this application;
FIG. 11 is a block diagram of a communication apparatus 100 according to this application; and
FIG. 12 is a block diagram of a communication apparatus 200 according to this application.

### DESCRIPTION OF EMBODIMENTS

The following describes technical solutions in embodiments of this application with reference to accompanying drawings.

A wireless communication system mentioned in this application includes but is not limited to a global system for mobile communications (global system for mobile communications, GSM), a long term evolution (long term evolution, LTE) frequency division duplex (frequency division duplex, FDD) system, an LTE time division duplex (time division duplex, TDD) system, an LTE system, a long term evolution advanced (LTE-Advanced, LTE-A) system, a next-generation communication system (for example, a 6G communication system), a converged system of a plurality of types of access systems, or an evolved system.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, the internet of vehicles. Communication manners in an internet of vehicles system are collectively referred to as vehicle-to-X (vehicle-to-X, V2X, where X may represent everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

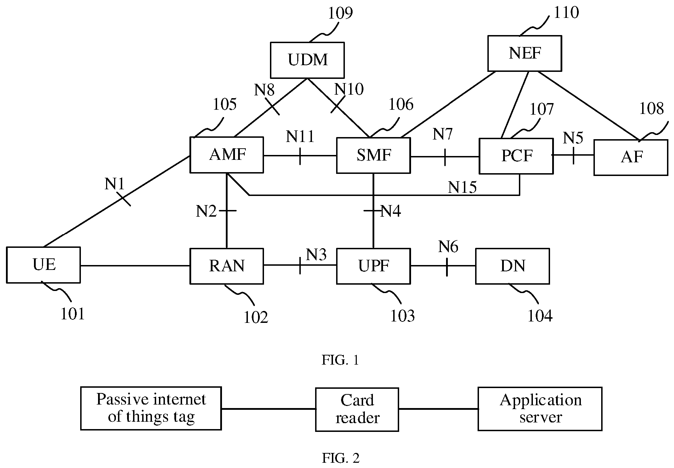

First, a network architecture applicable to this application is briefly described. In an example, FIG. 1 is a diagram of a network architecture applicable to this application.

As shown in FIG. 1, a 5G system (the 5th generation system, 5GS) is used as an example of the network architecture. An architecture of the 5G system is divided into two parts: an access network and a core network. The network architecture may include but is not limited to: a unified data management (unified data management, UDM), a network discovery function (network exposure function, NEF), a network repository function (NF repository function, NRF), a policy control function (policy control function, PCF), an application function (application function, AF), an access and mobility management function (access and mobility management function, AMF), a session management function (session management function, SMF), user equipment (user equipment, UE), a radio access network device, a user plane function (user plane function, UPF), and a data network (data network, DN). The DN may be the internet. The UDM, the NEF, the NRF, the PCF, the AF, the AMF, the SMF, and the UPF are network elements in the core network. Because the 5G system is used as an example in FIG. 1, the core network may be referred to as a 5G core network (5G core network, 5GC or 5GCN).

The following briefly describes the network elements shown in FIG. 1.
1. The user equipment (user equipment, UE) (101) may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device that has a wireless connection function. Currently, examples of some terminals are as follows: a mobile phone (mobile phone), a tablet computer, a notebook computer, a palmtop computer, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device that has a wireless communication function, a computing device, another processing device connected to a wireless modem, a terminal device in a 5G network, a terminal device in a future evolved public land mobile network (public land mobile network, PLMN), and the like. This is not limited in embodiments of this application.

By way of example and not limitation, in embodiments of this application, the terminal device may alternatively be a wearable device. The wearable device may also be referred to as a wearable intelligent device, and is a general term for wearable devices, such as glasses, gloves, watches, clothes, and shoes, that are developed by applying wearable technologies to intelligent designs of daily wear. The wearable device is a portable device that is directly worn on a body or integrated into clothes or an accessory of the user. The wearable device is not only a hardware device, but also implements a powerful function through software support, data exchange, and cloud interaction. **In a** broad sense, the wearable intelligent device includes a full-featured and large-sized device that can implement all or some functions without depending on a smartphone, for example, a smart watch or smart glasses, and includes devices that are dedicated to only one type of application function and need to collaboratively work with other devices such as smartphones, for example, various smart bands or smart jewelry for monitoring physical signs.

In addition, in embodiments of this application, the terminal device may alternatively be a terminal device in an IoT system. An IoT is an important part of future information technology development. A main technical feature of the IoT is to connect articles to a network by using a communication technology, to implement an intelligent network for human-machine interconnection and thing-thing interconnection.

It should be noted that the terminal device and an access network device may communicate with each other by using an air interface technology (for example, an NR technology or an LTE technology). Terminal devices may also communicate with each other by using an air interface technology (for example, the NR technology or the LTE technology).

In embodiments of this application, an apparatus configured to implement a function of the terminal device may be a terminal device, or may be an apparatus that can support the terminal device in implementing the function, for example, a chip system or a chip. The apparatus may be installed in the terminal device. In embodiments of this application, the chip system may include a chip, or may include a chip and another discrete device.

2. The (radio) access network ((radio) access network, (R)AN) device (102) may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses an AN device for representation.

The RAN device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), code division multiple access (code division multiple access, CDMA), and the like. The AN device may allow interconnection and interworking to be performed between the terminal device and a 3GPP core network by using the non-3GPP technology.

The RAN device is responsible for functions on an air interface side, such as radio resource management, quality of service (quality of service, QoS) management, and data compression and encryption. The AN device provides an access service for the terminal device, to complete forwarding of a control signal and user data between the terminal device and the core network.

For example, the RAN device may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a wireless relay node, a wireless backhaul node, a transmission point (transmission point, TP), or a transmission reception point (transmission and reception point, TRP); or may be a gNB or a transmission point (a TRP or a TP) in the 5G (for example, NR) system, or one antenna panel or a group of antenna panels (including a plurality of antenna panels) of a base station in the 5G system; or may be a network node that forms a gNB or a transmission point, for example, a distributed unit (distributed unit, DU) or a base station in a next-generation 6G communication system. A specific technology and a specific device form that are used by the AN device are not limited in embodiments of this application.
3. The user plane function (user plane function, UPF) network element (103) may be for packet routing and forwarding, quality of service (quality of service, QoS) handling for user plane data, or the like. User data may be accessed to the data network (data network, DN) via the network element. In embodiments of this application, the user plane function network element may be configured to implement a function of a user plane network element.
4. The data network (digital network, DN) (104) is a network used to provide data transmission, for example, an operator service network, the Internet (Internet), or a third-party service network.
5. The access and mobility management function (access and mobility management function, AMF) network element (105) is mainly for mobility management, access management, and the like, and may be configured to implement a function other than session management in a mobility management entity (mobility management entity, MME) functions, for example, a function such as lawful interception or access authorization (or authentication). In embodiments of this application, the access and mobility management function network element may be configured to implement a function of an access and mobility management function network element.
6. The session management function (session management function, SMF) network element (106) is mainly for session management, IP address allocation and management of the terminal device, selection and management of a user plane function, termination of interfaces toward policy control or charging functions, downlink data notification, and the like. In embodiments of this application, the session management function network element may be configured to implement a function of a session management network element.
7. The policy control (policy control function, PCF) network element (107) is a unified policy framework for guiding network behavior, and provides policy rule information and the like for a control plane function network element (for example, the AMF or SMF network element).
8. The application function (application function, AF) network element (108) is configured to: perform application-affected data routing, access the network exposure function network element, interact with a policy framework for policy control, or the like. In this application, the AF may alternatively be understood as an application server.
9. The unified data management (unified data management, UDM) network element (109) is for unified data management, 5G user data management, user identifier processing, access authentication, registration, mobility management, or the like.
10. Network exposure function (network exposure function, NEF) network element: The NEF is located at a boundary of a 5GC network element and a third-party function network element AF, and is for collection, analysis, reassembly, and exposure of a network capability.

In the network architecture shown in FIG. 1, the network elements may communicate with each other through interfaces shown in the figure. As shown in the figure, an N1 interface is a reference point between the terminal device and the AMF. An N2 interface is a reference point between the RAN and the AMF, and is used to send a non-access stratum (non-access stratum, NAS) message and the like. An N3 interface is a reference point between the RAN and the UPF, and is used for transmission of user plane data and the like. An N4 interface is a reference point between the SMF and the UPF, and is used for transmission of information such as tunnel identification information of an N3 connection, data buffer indication information, and a downlink data notification message. An N5 interface is a reference point between the PCF and the AF. An N6 interface is a reference point between the UPF and the DN, and is used for transmission of user plane data and the like. An N7 interface is a reference point between the SMF and the PCF. An N8 interface is a reference point between the AMF and the UDM. An N11 interface is a reference point between AMFs. Relationships between other interfaces and the network elements are shown in FIG. 1. For brevity, details are not described herein.

It should be understood that the network architecture shown in FIG. 1 is merely an example for description, and a network architecture applicable to embodiments of this application is not limited thereto. Any network architecture that can implement functions of the foregoing network elements is applicable to embodiments of this application.

It should be further understood that the functions or network elements such as the AMF, the NEF, and the AF shown in FIG. 1 may be understood as network elements configured to implement different functions, and for example, may be combined into a network slice as required. These network elements may be independent devices, may be integrated into a same device to implement different functions, may be network elements in a hardware device, may be software functions running on dedicated hardware, or may be virtualized functions instantiated on a platform (for example, a cloud platform). Specific forms of the network elements are not limited in this application.

It should be further understood that the foregoing names are defined merely for ease of distinguishing between different functions, and shall not constitute any limitation on this application. This application does not exclude a possibility of using another name in a 6G network and another future network. For example, in the 6G network, some or all of the foregoing network elements may still use the terms in 5G, or may use other names.

For ease of understanding the technical solutions in this application, the following first briefly describes several technical names in this application.
1. Radio frequency identification (radio frequency identification, RFID) is a non-contact automatic identification technology. A basic principle of the radio frequency identification is to implement automatic identification of an identified object by using transmission characteristics of a radio frequency signal and space coupling (for example, inductance or electromagnetic coupling) or radar reflection. Usually, an identification process may be as follows: After entering a reader/writer (reader) (which may also be understood as a reader), a tag (tag) receives a radio frequency signal sent by the reader/writer, and the tag (for example, a passive tag) may send, by using energy obtained based on an induced current, product information stored in a chip, or the tag (for example, an active tag) actively sends a signal with a specific frequency. After reading and decoding the information, the reader/writer sends the information to a central information system for related data processing.
2. A passive internet of things terminal device is essentially a passive terminal device. For example, this type of terminal device may not have a power cable or a built-in battery, but obtains energy from an environment. For example, the passive internet of things terminal device may be an internet of things terminal device that is based on a radio electromagnetic energy capture technology. The passive internet of things terminal device captures and collects energy by collecting a radio wave transmitted from a network side, to complete data collection, transmission, and distributed computing. An RFID terminal device is a typical passive internet of things terminal device. The passive internet of things terminal device is also referred to as an "ambient internet of things (Ambient IoT) terminal device".
3. Proximity service (proximity service, ProSe)

The proximity service is a service provided based on a short-distance communication technology in a communication system defined in the 3rd generation partnership project (the 3rd generation partner project, 3GPP) and when terminal devices are adjacent to each other, and allows two or more terminal devices authorized with a ProSe function to directly communicate with each other without any relay or base station. The "short distance" mentioned above may not only mean a physical range, but also mean proximity that is based on channel quality, a signal-to-noise ratio, or a throughput. The proximity service mainly includes three functions: a direct discovery (direct discovery) function, direct communication (direct communication), and a UE-to-network relay (UE-to-network relay). The direct discovery function means that a terminal device discovers that there is a terminal device that can be directly connected around, and the direct communication function means that the terminal device can perform data transmission with the terminal device. In the UE-to-network relay, relay UE provides a function of supporting a connection between remote UE and a network. The UE-to-network relay in this application may include a layer 2 (layer 2, L2) UE-to-network relay.

FIG. 2 shows an RFID system architecture. As shown in FIG. 2, generally, a complete RFID system may include three parts: a reader/writer, an electronic tag, and a data management system (for example, an application server). A working principle of the RFID system is as follows: The reader/writer transmits radio wave energy with a specific frequency to drive a circuit, so as to send internal data. In this case, the reader/writer may receive and interpret data in sequence, and send the data to an application program for corresponding processing. In other words, when the RFID tag is close to the reader/writer, the RFID tag receives a radio frequency signal sent by the reader/writer, generates an induced current, and obtains energy. The tag may send information by using the collected energy, to implement communication with the reader/writer.

The RFID reader/writer may perform wireless communication with the RFID electronic tag through an antenna, and may implement a read or write operation performed on a tag identification code and memory data. A typical reader includes a high frequency module (for example, a transmitter or a receiver), a control unit, and a reader antenna. The RFID reader/writer may alternatively be understood as a device communicating with a tag, and may be in a form of a terminal, a base station, or a device having a read/write function.

The electronic tag includes a tag antenna and a tag-dedicated chip. Usually, electronic tags may be classified into an active electronic tag (active tag), a passive electronic tag (passive tag), and a semi-passive electronic tag (semi-passive tag) based on different power supply modes of the electronic tags. The active electronic tag is equipped with a battery, a passive radio frequency tag is not equipped with a battery, and the semi-passive electronic tag partially relies on a battery to work. The electronic tags may be classified into a low frequency electronic tag, a high frequency electronic tag, an ultra-high frequency electronic tag, and a microwave electronic tag based on different frequencies. Certainly, classification may alternatively be performed based on different encapsulation forms, and details are not described herein. The passive tag may also be referred to as a passive internet of things (passive internet of things, IOT) device. Therefore, the RFID electronic tag may alternatively be considered as a terminal device.

"Inventory" in this application may be understood as follows: After receiving mask information and a flag bit that are specified by the reader/writer, if information in a tag storage area matches the received mask information, and a flag bit stored by the tag is consistent with that indicated by the reader/writer, the electronic tag may enter an inventory procedure. That is, the electronic tag initiates random access to the reader/writer, and completes a corresponding instruction or operation of the reader/writer. For example, in a current technology, usually, the reader/writer may perform an operation like a read (read) operation, a write (write) operation, an access (access) operation, a kill (kill) operation, a lock operation, a block write operation, or a block erase operation on the tag based on an indication of the application server.

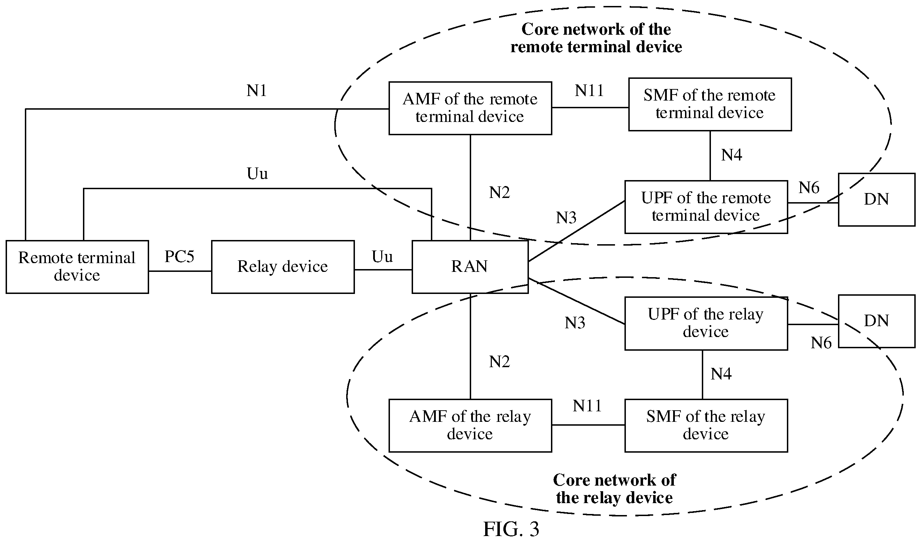

In a 5G system, a terminal device outside a network coverage area may access a data network through a relay of a terminal device within the network coverage area, to resolve a problem that the terminal device outside the network coverage area cannot communicate with a network device. This technology is referred to as "UE-to-network relay UE (UE-to-network relay UE, U2N relay UE)", and is a technology of a 5G system proximity service (proximity service, ProSe). The UE-to-network relay technology includes a layer 2 (layer 2, L2) based relay technology. FIG. 3 is an architectural diagram. FIG. 3 includes a remote (remote) terminal device, a relay (relay) terminal device, a radio access network, a core network of the remote terminal device, and a core network of the relay device. The relay device may register with an AMF of the relay device via a RAN based on a registration procedure of a common terminal device, and may establish a protocol data unit (protocol data unit, PDU) session to access a data network. The remote terminal device may establish a PC5 connection to the relay device. The remote terminal device may forward a (radio resource control, RRC) message to the RAN via the relay device. The RAN selects an AMF for the remote terminal device, and then sends the RRC message to the AMF that provides a service for the remote terminal device. In this application, the "U2N relay UE" is referred to as "relay UE" or a "relay device" for short.

The solution shown in FIG. 2 is applicable to a small-scale, small-range, and short-distance scenario. For a large-scale, large-range, and long-distance scenario, if the solution in FIG. 2 is still used, a large quantity of card readers are needed. Consequently, costs are increased, and communication quality is poor. Therefore, in consideration of a large-scale, large-range, and large-coverage scenario, how a passive terminal device communicates with a network device becomes a technical problem that needs to be resolved.

This application proposes that a 5G network be introduced to perform operations such as reading and writing on an RFID terminal device, so that tag costs can be reduced and the communication quality can be ensured in a 5G network coverage area. However, because indoor coverage of the 5G network is weak and an uplink signal of the RFID terminal device is weak, an indoor RFID cannot be read or operated. Therefore, in an indoor coverage scenario, how the passive terminal device should communicate with the network device becomes a technical problem that needs to be resolved.

In view of this, this application provides a communication method. Because a relay device may communicate with a core network element via a first radio access network device, the relay device may obtain an identifier of a terminal device in a coverage area of the relay device, and send the identifier to a first access and mobility management function network element via the first radio access network device. In this way, in a scenario in which the indoor coverage of the 5G network is weak and a scenario in which the uplink signal of the RFID terminal device is weak, the communication between the terminal device and the network device can be implemented, and in the large-coverage, large-scale, and large-range scenario, the communication between the terminal device and the network device can also be implemented.

It should be noted that the "terminal device" mentioned in this application may be understood as, for example, an internet of things terminal device. Specifically, it may be understood as an ambient internet of things (Ambient IoT) terminal device or a passive IoT device. For example, the internet of things terminal device may be a passive terminal device, a semi-passive terminal device, a passive internet of things terminal device, a tag, or the like.

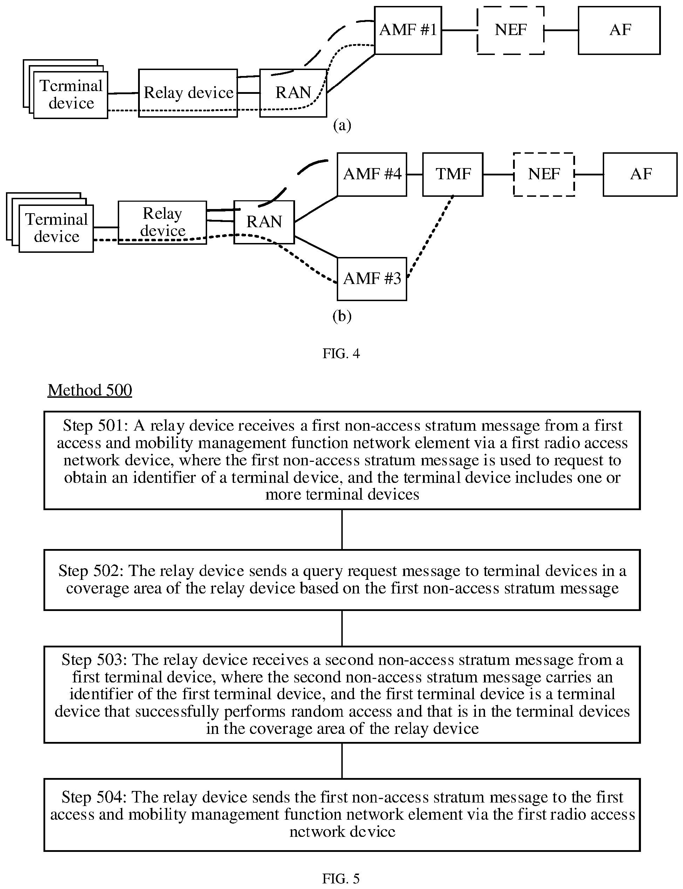

Further, this application provides two communication system architectures. (a) in FIG. 4 shows one of the architectures. As shown in (a) in FIG. 4, a communication system may include a terminal device, a relay device, a RAN, an AMF #1, and an AF. Optionally, a NEF network element may be further included. The relay device may register with the AMF #1 via the RAN. **In** the architecture, the AMF #1 supports a tag management function. For example, the AMF #1 supports a tag management operation (for example, inventory). **In** a possible implementation, the AMF #1 may communicate with the AF via the NEF. **In** another possible implementation, the AMF #1 may directly receive an inventory command from the AF, and perform a target operation on a tag via the relay device. The terminal device may send a non-access stratum (non-access stratum, NAS) message to the AMF #1 via the relay device, to report information about an execution result corresponding to the target operation. It may be understood as that, in the architecture, AMFs that provide services for the relay device and the terminal device are a same AMF, for example, the AMF #1.

(b) in FIG. 4 shows the other architecture. **In** the architecture, AMFs that provide services for a relay device and a terminal device may be different AMFs. For example, the AMF that provides the service for the relay device is denoted as an AMF #4, and the AMF that provides the service for the terminal device is denoted as an "AMF #3". The architecture further includes a tag management function (tag management function, TMF) network element, and the network element may support a tag management operation. In a possible implementation, the TMF may directly communicate with an AF. In another possible implementation, the TMF may communicate with the AF via a NEF. The TMF may receive an inventory command from the AF, and send the inventory command to the relay device via the AMF #4, to perform a target operation on a tag. The terminal device sends, to the AMF #3 via the relay device, a NAS message that carries information about an execution result corresponding to the target operation, and the AMF #3 may send the NAS message to the TMF.

FIG. 5 is a schematic flowchart of a communication method 500 according to this application. The method is applicable to the architecture in (a) in FIG. 4. The method includes the following steps.

Step 501: A relay device receives a first non-access stratum message from a first access and mobility management function network element via a first radio access network device, where the first non-access stratum message is used to request to obtain an identifier of a terminal device, and the terminal device includes one or more terminal devices.

It should be noted that the "relay device" in this application is a device that supports communication with an internet of things device. For example, the "relay device" is a device that supports communication with an ambient internet of things terminal device. For example, the "relay device" is a terminal device having a relay capability. For example, an antenna of the "relay device" may be located outdoors, and is configured to communicate with a network device. A physical apparatus of the "relay device" may be located indoors, and is configured to communicate with the terminal device. **In** other words, when the "terminal device" in this application performs uplink transmission, strength of a sent signal is weak, and is insufficient to transmit the signal to the network device. Therefore, the "relay device" is needed to perform a "relay". **In** this application, the "relay device" has the capability, and may be configured to connect the terminal device to the network device. **In** this application, a specific implementation and a form of the "relay device" are not limited, and any device that has a capability of connecting the terminal device to the network device may be understood as the "relay device" mentioned in this application.

For example, the relay device may be "UE-to-network relay UE (UE-to-network relay UE, U2N relay UE)" in a 5G ProSe, and has a function of providing a connection (the "connection" in this application may alternatively be understood as "communication") between a 5G ProSe terminal device and the network device. **In** this application, the "U2N relay UE" is referred to as "relay UE", a "relay terminal device", or a "relay device" for short. The relay terminal device in this application may include an L2 relay terminal device.

Optionally, before step 501, the method further includes: The relay device sends a first radio resource control message to the first radio access network device, where the first radio resource control message carries a registration request message and first indication information.

In this application, the registration request message is used to request to register with an access and mobility management function network element, and the first indication information indicates that the relay device supports the communication with the ambient internet of things terminal device.

In this embodiment, after receiving the radio resource control message, the first radio access network device may select, for the relay device based on the first indication information, the first access and mobility management function network element that supports communication with the terminal device (for example, the ambient terminal device). The relay device may register with the first access and mobility management function network element. For example, the relay device may register with a core network by using a registration procedure of common UE.

It should be understood that, in this embodiment, after the first radio access network device selects the first access and mobility management function network element for the relay device, subsequently, after receiving any message from the relay device, the first radio access network device sends the message from the relay device to the first access and mobility management function network element.

Step 502: The relay device sends a query request message to terminal devices in a coverage area of the relay device based on the first non-access stratum message.

Specifically, for example, the relay device may send radio frequency information to the terminal devices in the coverage area. The radio frequency information may provide an excitation signal for the terminal devices in the coverage area of the relay device. After receiving the excitation signal, the terminal devices in the coverage area may send signals to the relay device. In addition, the relay device performs a selection operation on the terminal devices in the coverage area, and may select one or more target terminal devices through the selection operation. Information about the target terminal device of the selection operation may be determined based on an inventory object received in an inventory request. Further, the relay device may send a query request message to the one or more selected terminal devices, to request to obtain an identifier of the one or more terminal devices.

Step 503: The relay device receives a second non-access stratum message from a first terminal device, where the second non-access stratum message carries an identifier of the first terminal device, and the first terminal device is a terminal device that successfully performs random access and that is in the terminal devices in the coverage area of the relay device.

Specifically, for example, the one or more selected target terminal devices initiate a random access process, and one of the terminal devices that successfully performs random access is denoted as the "first terminal device". A specific random access process may include: The relay device includes a first random number in the query message, and the one or more selected terminal devices locally set a second random number based on the first random number. If a second random number set by one terminal device is 0, the terminal device sends a third random number to the access network device. If the access network device can correctly receive the third random number, the access network device sends the third random number to the terminal device. When the terminal device receives the third random number, the terminal device determines that random access succeeds.

Step 504: The relay device sends the second non-access stratum message to the first access and mobility management function network element via the first radio access network device.

As described above, after receiving the second non-access stratum message from the relay device, the first radio access network device determines to send the second non-access stratum message to the first access and mobility management function network element. This is because, in this application, the first indication information is carried during previous registration of the relay device, and the first radio access network device selects the first access and mobility management function network element for the relay device. Therefore, subsequently, the first radio access network device sends any received message sent by the relay device to an access and mobility management function network element to the first access and mobility management function network element.

In a conventional technology, each time the first radio access network device receives a message sent by the relay device to the access and mobility management function network element, the first radio access network device randomly selects an access and mobility management function network element for the relay device. Therefore, according to the technical solution in the conventional technology, it is inconvenient for the access and mobility management function network element to perform inventory on the terminal device. Based on the architecture provided in this application, in a scenario in which indoor coverage of a 5G network is weak and a scenario in which an uplink signal of an RFID terminal device is weak, the first mobility management function network element can perform inventory on the terminal device.

In consideration of a scenario in which the relay device moves, in this case, the relay device may be handed over from the first radio access network device to a second radio access network device. In this case, the relay device may send a second radio resource control message to the second radio access device, where the message carries the registration request message and the first indication information. The second radio access network device selects, for the relay device based on the first indication information, a second mobility management function network element that supports communication with the terminal device (for example, the terminal device is the ambient internet of things terminal device). The relay device may register with the second access and mobility management function network element.

According to the foregoing technical solution, in this application, because the relay device may communicate with a core network element via the first radio access network device, the relay device may obtain the identifier of the terminal device in the coverage area of the relay device, and send the identifier to the first access and mobility management function network element via the first radio access network device. In this way, in the scenario in which the indoor coverage of the 5G network is weak and the scenario in which the uplink signal of the RFID terminal device is weak, communication between the terminal device and the network device can be implemented, and in a large-coverage, large-scale, and large-range scenario, the communication between the terminal device and the network device is also implemented.

In addition, the first indication information is carried when the relay device registers with the core network, and the indication information indicates that the relay device supports the communication with the terminal device. Therefore, the first radio access network device may select the first access and mobility management function network element for the relay device, and subsequently, the first radio access network device sends any message sent by the relay device to the access and mobility management function network element to the first access and mobility management function network element. This can facilitate the inventory and management that are performed by the first access and mobility management function network element on the terminal device.

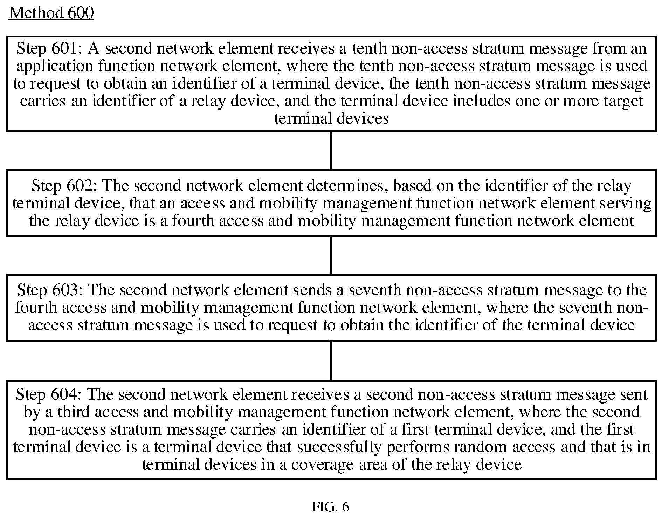

FIG. 6 is a schematic flowchart of a communication method 600 according to this application. The method is applicable to the architecture in (b) in FIG. 4. The method includes the following steps.

Step 601: A second network element receives a tenth non-access stratum message from an application function network element, where the tenth non-access stratum message is used to request to obtain an identifier of a terminal device, the tenth non-access stratum message carries an identifier of a relay device, and the terminal device includes one or more target terminal devices.

In this application, the second network element supports management or inventory on the terminal device. For example, the second network element may be referred to as a "tag management function network element". It should be noted that a specific name of the second network element is not limited in this application.

Step 602: The second network element determines, based on the identifier of the relay device, that an access and mobility management function network element serving the relay device is a fourth access and mobility management function network element.

It should be understood that, when registering with a core network, the relay device may report the identifier of the relay device to a core network element. The core network element may select, for the terminal device based on the identifier of the relay device, a fourth access and mobility management function network element that provides a service for the terminal device.

Step 603: The second network element sends a seventh non-access stratum message to the fourth access and mobility management function network element, where the seventh non-access stratum message is used to request to obtain the identifier of the terminal device.

In a possible implementation, the seventh non-access stratum message carries an inventory identifier, and the inventory identifier may be understood as a specific identifier allocated by the application function network element to a current inventory service. When receiving messages from different access and mobility management function network elements, the second network element may determine, based on the inventory identifier, that the message is associated with the current inventory service.

In another possible implementation, the seventh non-access stratum message further carries inventory indication information, and the inventory indication information includes at least one of the following content: a value interval of the identifier of the terminal device, an identifier list of the terminal device, an identifier of a group of the terminal device, or information indicating to query for an identifier of any terminal device. Subsequently, when receiving messages from different access and mobility management function network elements, the second network element may determine whether an identifier that is of a terminal device and that is carried in the message meets at least one of the foregoing indication information, to determine whether the message is associated with a current inventory service.

Step 604: The second network element receives a second non-access stratum message from a third access and mobility management function network element, where the second non-access stratum message carries an identifier of a first terminal device, and the first terminal device is a terminal device that successfully performs random access and that is in terminal devices in a coverage area of the relay device.

As described above, in the architecture (b), the access and mobility management function network element that provides the service for the relay device may be different from the access and mobility management function network element that provides the service for the terminal device. In this embodiment, when receiving a message sent by the relay device to the access and mobility management function network element, a radio access network device may randomly select an access and mobility management function network element. Therefore, the fourth access and mobility management function network element may be different from the third access and mobility management function network element.

In this embodiment, in a possible implementation, the second network element sends the inventory identifier to the fourth access and mobility management function network element. Subsequently, provided that the second non-access stratum message received by the second network element from the third access and mobility management function network element carries the inventory identifier, the second network element may determine that the message is a response message of the seventh non-access stratum message. In another possible implementation, because the application function network element sends the inventory indication information to the second network element, subsequently, if the identifier that is of the terminal device and that is carried in the second non-access stratum message received by the second network element from the third access and mobility management function network element meets at least one of the inventory indication information, the second network element may determine that the message is a response message of the seventh non-access stratum message. In other words, according to the technical solution provided in this application, the second network element may implement management and inventory on the terminal device.

According to the foregoing technical solution, in this application, because the relay device may communicate with the core network element via the radio access network device and the access and mobility management function network element, the relay device may obtain an identifier of the terminal device in the coverage area of the relay device, and send the identifier to the second network element via the access and mobility management function network element, and the second network element may determine a response message of an inventory command based on the inventory identifier or the inventory indication information, and implements the inventory on the terminal device. In this way, communication between the terminal device and a network device is implemented in a large-coverage, large-scale, and large-range scenario.

In this application, in the following specific embodiments, an example in which the terminal device is a tag is used to describe the technical solutions of this application.

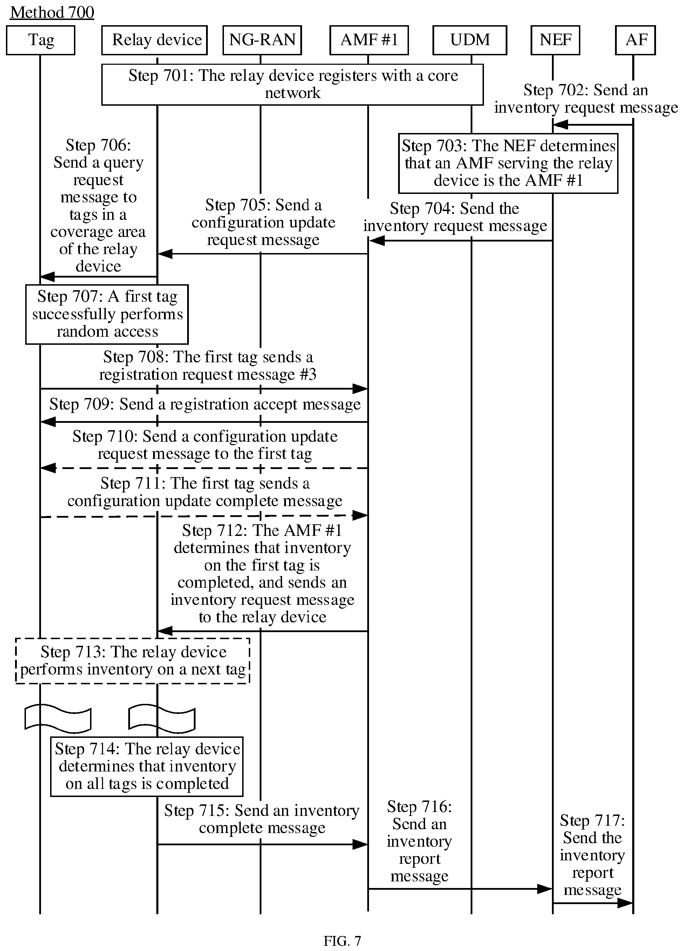

FIG. 7 is a schematic flowchart of another communication method 700 according to this application. In the method 700, it is assumed that an AMF that provides a service for a relay device and an AMF that provides a service for a tag are the same, and both are an AMF #1. That is, the method 700 is applicable to the architecture in (a) in FIG. 4. The following describes steps shown in FIG. 7. It should be noted that steps represented by dashed lines in FIG. 7 are optional, and details are not described below. The method includes the following steps.

Step 701: The relay device registers with a core network.

For example, the relay device may register with the core network based on a registration procedure of a common terminal device. For details, refer to the 3GPP technical specification (technical specification, TS.23.502 4.2.2.2.2). Details are not described.

Optionally, in a registration process, the relay device sends a radio resource control (radio resource control, RRC) message to a RAN, where the RRC message carries a registration request message #1 and indication information #1, and the indication information #1 indicates that the relay device supports communication with the tag (an example of an ambient terminal device). In a possible implementation, the RAN may select, for the relay device, an AMF that supports communication with the tag, where the AMF is denoted as the AMF #1. In another possible implementation, if an AMF selected by the RAN for the relay device does not support communication with the tag, the AMF may initiate a redirection procedure. To be specific, the registration request message of the relay device is redirected to an AMF that supports communication with the tag, where the AMF is denoted as the AMF #1. In still another possible implementation, the RAN may alternatively select, for the relay device by using configuration information, an AMF that supports communication with the tag, where the AMF is denoted as the AMF #1.

Optionally, the registration request message #1 may further carry an identifier of the relay device. For example, the identifier is a subscription concealed identifier (subscription concealed identifier, SUCI) of the relay device, a 5G globally unique temporary UE identity (5th generation globally unique temporary UE identity, 5G-GUTI) of the relay device, or the like.

Further, the AMF #1 may send a registration request message #2 (for example, Nudm_UECM_Registration) to a UDM, where the registration request message #2 includes an identifier of the AMF #1 and the identifier of the relay device. The AMF may obtain subscription information of the relay device from the UDM based on the identifier of the relay device, and perform authentication on the relay device. After the authentication succeeds, the AMF #1 may send a registration accept message to the relay device.

Step 702: An AF sends an inventory request message to a NEF, where the inventory request message is used to request to obtain an identifier of the tag.

Optionally, the inventory request message includes the identifier of the relay device. For example, the identifier may be a generic public subscription identifier (generic public subscription identifier, GPSI) of the relay device. It should be understood that a generic GPSI is usually needed to process 3GPP users in different data networks outside a 3GPP system. For example, a UDM in the 3GPP system stores a mapping relationship between the GPSI and a corresponding SUPI.

Optionally, the inventory request message further includes an inventory object. For example, the inventory object may be at least one of the following content: a value interval of the identifier of the tag, an identifier list of the tag, an identifier of a tag group, an identifier of an application, an identifier of an enterprise user, or information indicating to query for an identifier of any tag. For example, the value interval of the identifier of the tag may be, for example, a tag identifier #10 to a tag identifier #150, that is, the AF may indicate that inventory needs to be performed on all tags including the tag #10 to the tag #150. For example, the identifier list of the tag may be, for example, an identifier corresponding to each tag. For example, the list may include the tag identifier #10, a tag identifier #13, a tag identifier #20, a tag identifier #25, and the like. That is, the AF may explicitly indicate an identifier of a tag on which inventory needs to be performed. For example, the identifier of the tag group may be, for example, a tag group identifier #1 or a tag group identifier #, where tags included in the tag group #1 are a tag identifier #1 to a tag identifier #50, and tags included in the tag group #2 are a tag identifier #160 to a tag identifier #200. For example, the identifier of the application may be understood as an application #1, and the application includes a plurality of tags, that is, the AF may indicate to perform inventory on a tag of an application. For example, the identifier of the enterprise user may be understood as a tag included in the enterprise user. For example, if an enterprise user #1 includes a tag #100 to a tag #1000, the AF may indicate to perform inventory on the tags included in the enterprise user. For example, the AF may alternatively indicate to query for the identifier of the any tag, that is, the AF may alternatively not explicitly indicate to specifically query for a tag.

Optionally, the inventory request message further includes indication information #2, where the indication information #2 indicates a command that needs to be executed on the tag and a command execution parameter. It may alternatively be understood as that the inventory request message further includes an indication of a target operation that needs to be performed on the tag. For example, a command indication may be one or more of the following content: a read (read) command (which may also be referred to as a "read operation"), a write (write) command, an erase (erase) command, a block write (block read) command, a block erase (block erase) command, a kill (kill) command, a lock (lock) command, an access (access) command, or the like. For example, for the read command, the command execution parameter may include a read storage area, a start word address of the read storage area, a quantity of words, and the like. For another example, for the write command, the command execution parameter includes a written storage area, a start word of the written storage area, and written data. For written information, same written information may be carried for all inventory objects, or different written information may be respectively carried for different inventory objects.

Step 703: The NEF determines that the AMF serving the relay device is the AMF #1.

As described above, the UDM may store a mapping relationship between the SUCI and the GPSI, or the UDM may store a mapping relationship between the 5G-GUTI and the GPSI, and determine the identifier of the relay device based on the mapping relationship. For example, the NEF may interact with the UDM, and determine, based on the identifier of the relay device, the AMF #1 serving the relay device.

Step 704: The NEF sends the inventory request message to the AMF #1.

Optionally, the inventory message may include at least one of the following content: the identifier of the relay device, the inventory object, or the indication information #2.

Step 705: The AMF #1 sends a configuration update request message to the relay device, where the message is used to request the identifier of the tag.

Optionally, the configuration update request message may include at least one of the following content: the inventory object, the indication information #2, or the like.

Step 706: The relay device sends a query request message to tags in a coverage area of the relay device, where the message is used to query for the identifier of the tag.

For example, the relay device may send radio frequency information to the tags in the coverage area. The radio frequency information may provide an excitation signal for the tags in the coverage area of the relay device. After receiving the excitation signal, the tags in the coverage area may send response signals to the relay device. For example, there are 200 tags in the coverage area, and 170 tags send response signals to the relay device.

Further, after receiving a response signal of one or more tags, the relay device may select a tag. It is assumed that the relay device receives inventory object information. In this case, the relay device may perform a selection operation on tags that make a response, and may select one or more tags based on the selection operation. The relay device may send the query request message to the one or more selected tags, to request to obtain an identifier of the one or more tags.

Step 707: A first tag successfully performs random access.

For example, the one or more selected tags may initiate a random access process, and one of the tags that successfully performs random access is denoted as the "first tag". In a possible implementation, the random access process may include: The relay device includes a first random number in the query message, and the one or more selected tags locally set a second random number based on the first random number. If a second random number set by one tag is 0, the tag sends a third random number to the RAN. If the RAN can correctly receive the third random number, the RAN sends the third random number to the tag. When the tag receives the third random number, it indicates that the tag successfully performs random access.

Step 708: The first tag sends a registration request message #3 to the AMF #1, where the registration request message #3 carries an identifier of the first tag.

Optionally, the registration request message #3 may further include a type of the first tag. For example, the type of the first tag is a passive-type tag, or the type of the first tag is a semi-passive-type tag.

In a possible implementation, the first tag may send a message #1 via the relay device, where the registration request message #3 is encapsulated in the message #1, and the registration request message #3 carries the identifier of the first tag. After receiving the message #1, the RAN may decapsulate the message #1 to obtain the registration request message #3, encapsulate the registration request message by using a message #2, and send the message #2 to the AMF #1. The AMF #1 decapsulates the message #2 to obtain the registration request message #3. The foregoing implementation may alternatively be understood as that the RAN transmits the identifier of the first tag by transparently transmitting the message. As described above, in the architecture in (a) in FIG. 4, the indication information #1 is carried during previous registration of the relay device, and the RAN selects the AMF #1 for the relay device. Therefore, subsequently, the RAN sends any received message sent by the relay device to the AMF #1 to the AMF #1.

Specifically, for example, if the relay device includes the indication information #1 in the RRC message in step 701, in this step, the RAN may send the registration request message #3 to the AMF #1 selected in step 701. If the relay device includes the indication information #1 in a NAS message in step 701, in this step, the first tag includes first indication information in the message #1, and the RAN may send, based on the indication information #1, the registration request message #3 to the AMF #1 selected in step 701. In this step, the relay device forwards, to the RAN, the message #1 received from the first tag.

Step 709: The AMF #1 sends a registration accept message to the first tag, where the registration accept message indicates that the first tag is successfully registered.

In a possible implementation, the AMF #1 encapsulates the registration accept message into a message #3 and sends the message #3 to the RAN. The RAN decapsulates the message #3 to obtain the registration accept message, encapsulates the registration accept message into a message #4, and sends the message #4 to the first tag via the relay device. The foregoing implementation may alternatively be understood as that the relay device may forward the received message #4 to the first tag.

Optionally, the method further includes step 710: The AMF #1 sends a configuration update request message to the first tag, where the configuration update request message includes an execution command.

Optionally, the configuration update request message further includes an execution parameter corresponding to the execution command.

It is assumed that the AMF #1 further receives the execution command in step 704. In this case, the AMF #1 may send the configuration update request message to the first tag via the RAN, where the configuration update request message includes the execution command.

In a possible implementation, the AMF #1 encapsulates the configuration update request message into a message #5 and sends the message #5 to the RAN. After receiving the message #5 from the AMF #1, an NG-RAN decapsulates the message #5 to obtain the configuration update request message, encapsulates the configuration update request message into a message #6, and then sends the message #6 to the first tag via the relay device. In this step, the relay device may be responsible for forwarding the message #6.

Optionally, the method further includes step 711: The first tag sends a configuration update complete message to the AMF #1, where the configuration update complete message includes information about an execution result corresponding to the execution command.

For example, when the execution command includes a read operation, the information about the execution result corresponding to the execution command may include read data. The read data included in the information about the execution result corresponding to the execution command may be encrypted, for example, may be encrypted by using a key. There are a plurality of manners of obtaining the key. For example, another apparatus may send the key to the first tag. In a possible implementation, in an authentication procedure of the first tag, an authentication server sends the key to the first tag. Correspondingly, the first tag receives the key from the authentication server. The authentication server may directly send the key to the first tag, or may send the key via another apparatus. For another example, the authentication server sends the key to the AMF #1. Correspondingly, the AMF #1 receives the key from the authentication server. Further, the AMF #1 sends the key to the first tag. In another possible implementation, the key may be preconfigured on the tag.

For example, when the execution command includes a write operation, the information about the execution result corresponding to the execution command may include indication information indicating that the write operation is completed on the first tag.

For example, when the execution command includes an access operation, the information about the execution result corresponding to the execution command may include indication information indicating that the access operation is completed on the first tag.

For example, when the execution command includes a kill operation, the information about the execution result corresponding to the execution command may include indication information indicating that the kill operation is completed on the first tag.

For example, when the execution command includes a lock operation, the information about the execution result corresponding to the execution command may include indication information indicating that the lock operation is completed on the first tag.

For example, when the execution command includes a block write operation, the information about the execution result corresponding to the execution command may include indication information indicating that the block write operation is completed on the first tag.

For example, when the execution command includes a block erase operation, the information about the execution result corresponding to the execution command may include indication information indicating that the block erase operation is completed on the first tag.

Specifically, the first tag may send the configuration update complete message to the AMF #1 via the RAN. For example, the first tag may encapsulate the configuration update complete message into a message #7. After receiving the message #7 from the first tag, the RAN may decapsulate the message #7 to obtain the configuration update complete message, then encapsulate the configuration update complete message into a message #8, and send the message #8 to the AMF. In this step, the relay terminal terminal device may forward the message #7.

Step 712: The AMF #1 determines that inventory on the first tag is completed, and sends an inventory request message to the relay device.

For example, the AMF #1 may send an inventory request to the relay device, where the inventory request includes indication information #3, and the indication information #3 indicates at least one of the following content: indicates that the target operation is completed on the first tag, indicates to query for an identifier of a next tag, or indicates the tag to perform a next random access procedure. For example, the inventory request may be encapsulated in a configuration update request message, and the configuration update request message is sent to the relay device.

Step 713: The relay device performs inventory on the next tag.

In a possible implementation, after receiving the indication information #3, the relay device determines that the inventory on the current first tag is completed, and in this case, may continue to perform inventory on the next tag, that is, query for identification information of the next tag. The next tag is denoted as a second tag for differentiation.

The relay device may send the query request message to the one or more selected tags, to request to obtain the identifier of the one or more tags. In a possible implementation, the query request message may be a query repeat message. After receiving the query message, the first tag may actively exit an inventory process, that is, no longer respond to an operation request for the one or more selected tags. After receiving the query message, one or more other selected tags initiate a random access process, and one terminal device thereof that successfully performs random access is referred to as the second tag in this embodiment.

Specifically, the random access process may include: The one or more other selected tags subtract 1 from the previously set second random number. If a second random number of one tag is decreased to 0, the tag sends a fourth random number to the RAN. If the RAN can correctly receive the fourth random number, the RAN may send the fourth random number to the tag. When the tag receives the fourth random number, it indicates that the tag successfully performs random access. After the second tag successfully performs random access, the second tag sends identification information of the second tag to the AMF.

For a process of processing the second tag by the AMF #1, refer to the foregoing process (for example, step 708 to step 711) of processing the first tag. Details are not described again.

Step 714: The relay device determines that inventory on all tags is completed.

The foregoing process (for example, steps 706 to 713) is cyclically performed until the relay device does not receive, within configured time (for example, within a first time period), a random access request message initiated by any tag. In this case, the relay device determines that the inventory on all the tags in the coverage area of the relay device is completed. Alternatively, it may be understood as that the relay device determines that the query, the command execution, or the target operation is completed on the tags in the coverage area of the relay device.

Step 715: The relay device sends an inventory complete message to the AMF #1.

For example, the inventory complete message indicates that for the current inventory initiated by the AF, the relay device completes inventory on tags that can be found.

Step 716: The AMF #1 sends an inventory report message to the NEF.

For example, the message may include the identifier of the one or more tags. For another example, the message may alternatively include information about an execution result corresponding to the identifier of the one or more tags.

Step 717: The NEF sends the inventory report message to the AF.

For example, the message may include the identifier of the one or more tags. For another example, the message may alternatively include the information about the execution result corresponding to the identifier of the one or more tags.

According to the foregoing technical solution, in this application, because the relay device may communicate with a core network element via a first radio access network device, the relay device may obtain an identifier of a terminal device in the coverage area of the relay device, and send the identifier to a first access and mobility management function network element via the first radio access network device. In this way, in a large-coverage, large-scale, and large-range scenario, communication between the terminal device and a network device is implemented.

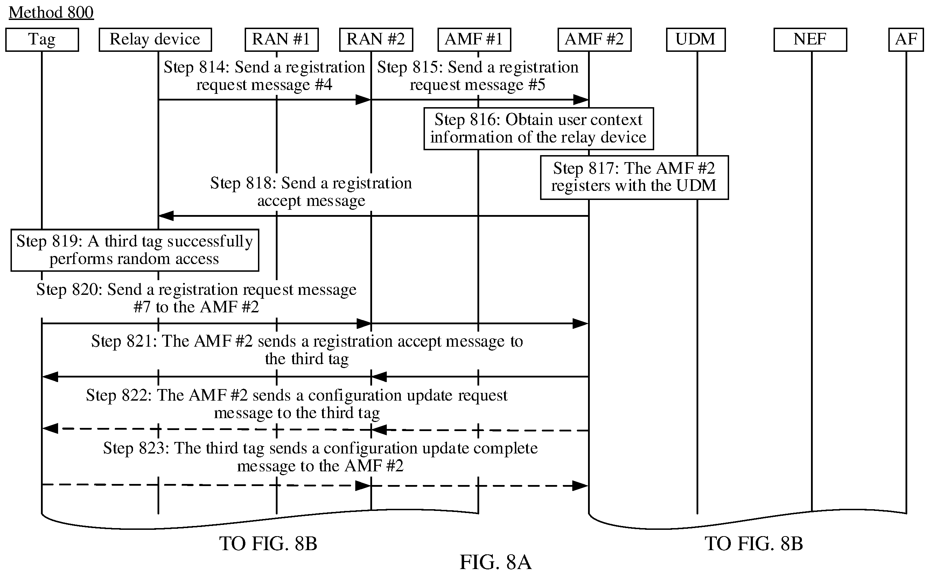

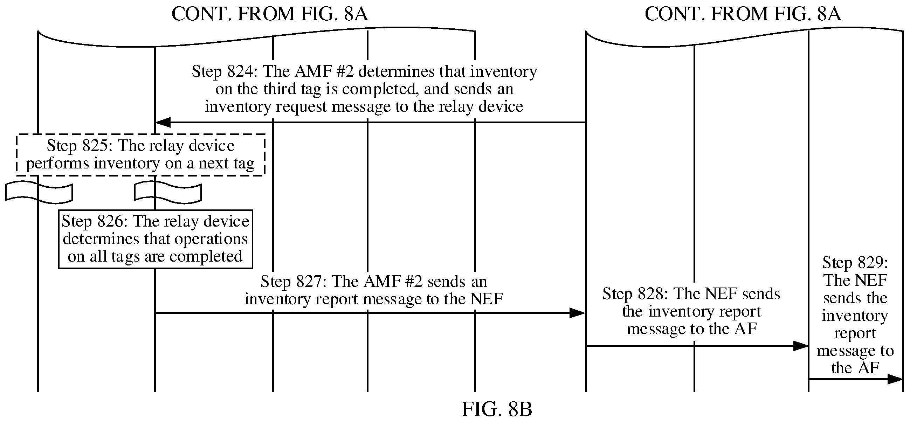

FIG. 8A and FIG. 8B are a schematic flowchart of still another communication method 800 according to this application. **In** the method 800, it is assumed that an AMF that provides a service for a relay device and an AMF that provides a service for a tag are the same. That is, the method 800 is applicable to the architecture in (a) in FIG. 4. **In** addition, in the method 800, it is further considered that if the relay device moves in a tag inventory process, a RAN that provides a service for the relay device and the AMF that provides the service for the relay device change. For example, the RAN that provides the service for the relay device is switched from a RAN #1 to a RAN #2, and similarly, the AMF that provides the service for the relay device is switched from an AMF #1 to an AMF #2. The following describes in detail how to continue to complete inventory after the relay device moves in the tag inventory process. The following describes steps shown in FIG. 8A and FIG. 8B. The method includes the following steps.

For step 801 to step 813, refer to step 701 to step 713 in the method 700. Details are not described again.

In this embodiment, it is assumed that when the relay device performs inventory on a third tag, a location of the relay device moves, and moves out of a coverage area of the current RAN #1 (which may alternatively be understood as a source RAN).

In this case, step 814 is performed. The relay device sends a registration request message #4 to the RAN #2, where the registration request message #4 includes an identifier of the relay device.

For example, the identifier is a subscription concealed identifier (subscription concealed identifier, SUCI) of the relay device, a 5G globally unique temporary UE identity (5th generation globally unique temporary UE identity, 5G-GUTI) of the relay device, or the like.

Step 815: The RAN #2 sends a registration request message #5 to the AMF #2 (which may alternatively be understood as a target AMF).

Optionally, if the relay device includes indication information #1 in the registration request message #4, and the indication information #1 indicates that the relay device supports communication with the tag, the RAN #2 may select, for the relay device, an AMF (denoted as the AMF #2 in this embodiment) that supports communication with the tag. Specifically, for an implementation in which the RAN #2 determines the AMF #2, refer to the descriptions about determining the AMF #1 by the RAN #1 in step 601 in the method 600.

Step 816: The AMF #2 obtains user context information of the relay device from the AMF #1 (which may alternatively be understood as a source AMF) based on the identifier of the relay device.

In this embodiment, the user context information includes inventory request information. Optionally, the inventory message may include at least one of the following content: the identifier of the relay device, where for example, the identifier may be a generic public subscription identifier (generic public subscription identifier, GPSI) of the relay device; an inventory object; or indication information #2, where the indication information #2 indicates a command that needs to be executed on the tag and a command execution parameter. For details, refer to the descriptions in step 602 in the method 600.

Step 817: The AMF #2 registers with a UDM.

For example, the AMF #2 may send a registration request message #6 (for example, Nudm_UECM_Registration) to the UDM, where the registration request message #6 includes an identifier of the AMF #2 and the identifier of the relay device.

Step 818: The AMF #2 sends a registration accept message to the relay device.

Step 819: The third tag successfully performs random access.

Specifically, for a random access process of the third tag, refer to step 707 in the method 700.

Step 820: The third tag sends a registration request message #7 to the AMF #2, where the registration request message #7 includes an identifier of the third tag.

Optionally, the registration request message #7 may further include a type of the third tag. For example, the type of the third tag is a passive-type tag, or the type of the third tag is a semi-passive-type tag.

Specifically, for an implementation of step 720, refer to the descriptions in step 708 in the method 700.

Step 821: The AMF #2 sends a registration accept message to the third tag, where the registration accept message indicates that the third tag is successfully registered.

Specifically, for an implementation of step 821, refer to the descriptions in step 709 in the method 700.

Optionally, the method further includes step 822: The AMF #2 sends a configuration update request message to the third tag, where the configuration update request message includes an execution command.

Optionally, the configuration update request message further includes an execution parameter corresponding to the execution command.

Specifically, for an implementation of step 822, refer to the descriptions in step 710 in the method 700.

Optionally, the method further includes step 823: The third tag sends a configuration update complete message to the AMF #2, where the configuration update complete message includes information about an execution result corresponding to the execution command.

Specifically, for an implementation of step 823, refer to the descriptions in step 711 in the method 700.

Step 824: The AMF #2 determines that the inventory on the third tag is completed, and sends an inventory request message to the relay device.

For example, the AMF #2 may send an inventory request to the relay device, where the inventory request includes indication information #4, and the indication information #4 indicates at least one of the following content: indicates that a target operation is completed on the third tag, indicates to query for an identifier of a next tag, or indicates the tag to perform a next random access procedure. For example, the inventory request may be encapsulated in a configuration update request message, and the configuration update request message is sent to the relay device.

Step 825: The relay device performs inventory on the next tag.

In a possible implementation, after receiving the indication information #4, the relay device determines that the inventory on the current third tag is completed, and in this case, may continue to perform inventory on the next tag, that is, query for identification information of the next tag. The next tag is denoted as a fourth tag for differentiation.

Specifically, for a specific implementation in which the relay device performs inventory on the fourth tag, refer to step 713 in the method 700.

Step 826: The relay device determines that operations on all tags are completed.

The foregoing process (for example, steps 819 to 825) is cyclically performed until the relay device does not receive, within configured time (for example, within a first time period), a random access request message initiated by any tag. In this case, the relay device determines that inventory on all the tags in a coverage area of the relay device is completed. Alternatively, it may be understood as that the relay device determines that the query, the command execution, or the target operation is completed on the tags in the coverage area of the relay device.

Step 827: The relay device sends an inventory complete message to the AMF #2.

For example, the inventory complete message indicates that for the current inventory initiated by an AF, the relay device completes inventory on tags that can be found.

Step 828: The AMF #2 sends an inventory report message to a NEF.

For example, the message may include an identifier of one or more tags. For another example, the message may alternatively include information about an execution result corresponding to an identifier of one or more tags.

Step 829: The NEF sends the inventory report message to the AF.

For example, the message may include the identifier of the one or more tags. For another example, the message may alternatively include the information about the execution result corresponding to the identifier of the one or more tags.

According to the foregoing technical solution, in this application, it is further considered that the location of the relay device moves in the tag inventory process. In this case, the relay device may switch the RAN and the AMF, and the target AMF may obtain the context information of the relay device from the source AMF, so that a core network element can continue to perform inventory on the tag. In this way, communication between the tag and a network device can be implemented in a large-coverage scenario.

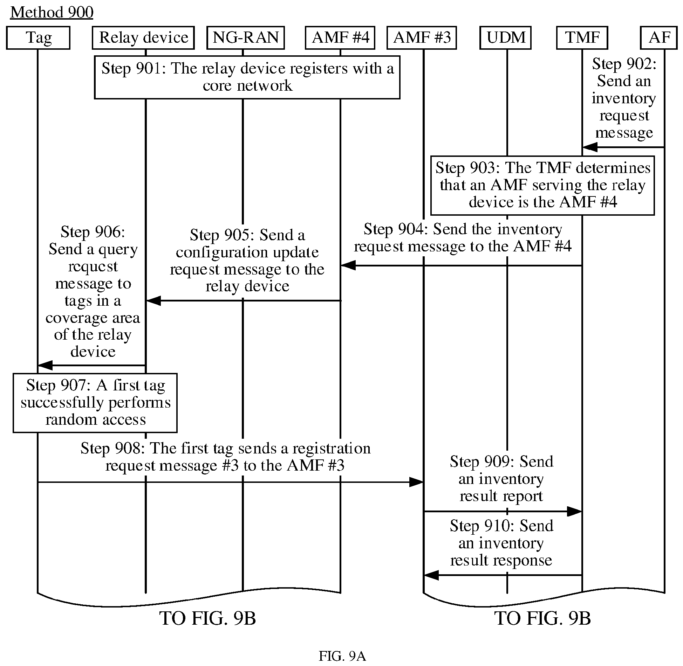

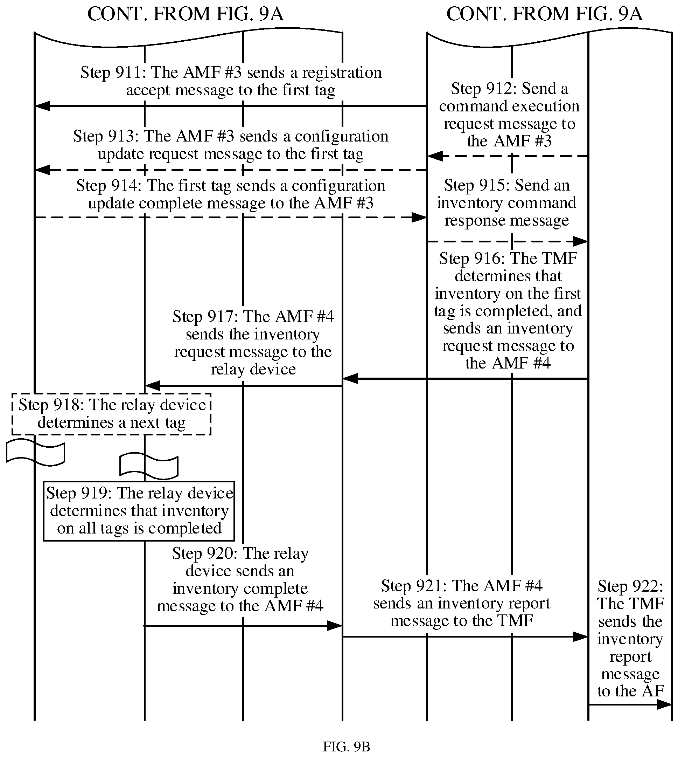

FIG. 9A and FIG. 9B are a schematic flowchart of still another communication method 900 according to this application. In the method 900, it is assumed that an AMF that provides a service for a relay device and an AMF that provides a service for a remote terminal device are different. That is, the method 900 is applicable to the architecture in (b) in FIG. 4. In this embodiment, it is assumed that the AMF that provides the service for the relay device is an AMF #4, and an AMF that provides a service for a tag is an AMF #3. The method includes the following steps.

Step 901: The relay device registers with a core network.

Specifically, for example, the relay device may register with the core network based on a registration procedure of a common terminal device.

Step 902: An AF sends an inventory request message to a TMF, where the inventory request message is used to request an identifier of the tag.

Optionally, the inventory request message includes: an identifier of the relay device, where for example, the identifier may be a generic public subscription identifier (generic public subscription identifier, GPSI) of the relay device; an inventory object, where the inventory object may be at least one of the following content: a value interval of the identifier of the tag, an identifier list of the tag, an identifier of a tag group, an identifier of an application, an identifier of an enterprise user, or information indicating to query for an identifier of any tag; and indication information #2, where the indication information #2 indicates a command that needs to be executed on the tag and a command execution parameter. For details, refer to the descriptions in step 702 in the method 700.

In a possible implementation, the AF may alternatively send the inventory request message to the TMF via a NEF.

Step 903: The TMF determines that the AMF serving the relay device is the AMF #4.

For example, the TMF may interact with a UDM, and obtain, based on the identifier of the relay device, the AMF #4 that provides the service for the relay device.

Step 904: The TMF sends the inventory request message to the AMF #4.

Optionally, the inventory message may include at least one of the following content: the identifier of the relay device, the inventory object, or the indication information #2.

In a possible implementation, the inventory request message may further include an inventory identifier, and the inventory identifier may be allocated by the TMF. For example, the "inventory identifier" may be an inventory identifier #1, and the inventory identifier #1 indicates that inventory needs to be performed on all passive-type tags. For another example, the "inventory identifier" may be an inventory identifier #2, and the inventory identifier #2 indicates that inventory needs to be performed on all semi-passive-type tags. The inventory identifier may be understood as a specific identifier allocated by the TMF to a current inventory service. When receiving messages from different AMFs, the TMF may determine, based on the inventory identifier, that the message is associated with the current inventory service.

In another possible implementation, the inventory request message further carries inventory indication information (which may alternatively be understood as the inventory object), and the inventory indication information includes at least one of the following content: a value interval of an identifier of the terminal device, an identifier list of the terminal device, an identifier of a group of the terminal device, or information indicating to query for an identifier of any terminal device. Subsequently, when receiving the messages from the different AMFs, the TMF may determine whether an identifier that is of a terminal device and that is carried in the message meets at least one of the foregoing indication information, to determine whether the message is associated with the current inventory service.

Step 905: The AMF #4 sends a configuration update request message to the relay device, where the message is used to request the identifier of the tag.

Optionally, the configuration update request message may include at least one of the following content: the inventory object, the indication information #2, or the like.

Optionally, the configuration update request message may further include the inventory identifier.

Step 906: The relay device sends a query request message to tags in a coverage area of the relay device, where the message is used to query for the identifier of the tag.

Specifically, for an implementation of step 906, refer to the descriptions in step 706 in the method 700.

Optionally, in step 806, the query request message further includes the inventory identifier.

Step 907: A first tag successfully performs random access.

Specifically, for an implementation of step 907, refer to the descriptions in step 707 in the method 700.

Step 908: The first tag sends a registration request message #3 to the AMF #3, where the registration request message #3 carries an identifier of the first tag.

Specifically, for an implementation of step 908, refer to the descriptions in step 708 in the method 700.

Step 909: The AMF #3 sends an inventory result report to the TMF.

For example, the inventory result report may include the identifier of the first tag.

Optionally, the inventory result further includes the inventory identifier. Optionally, the TMF may initiate an authentication procedure to the first tag.

Step 910: The TMF sends an inventory result response to the AMF #3.

For example, the TMF may determine, based on that the identifier of the first tag (or the inventory identifier) belongs to a range of the inventory object, that the first tag is the tag requested in the inventory request in step 802.

Step 911: The AMF #3 sends a registration accept message to the first tag, where the registration accept message indicates that the first tag is successfully registered.

Specifically, for an implementation of step 911, refer to step 709 in the method 700.

Optionally, the method further includes step 912: The TMF sends a command execution request message to the AMF #3, to indicate to execute the command on the tag.

If the TMF receives the indication information #2 from the AF in step 902, in this step, the TMF sends the command execution request message to the AMF #3.

Optionally, the request message further includes the execution parameter corresponding to the execution command.

Optionally, the method further includes step 913: The AMF #3 sends a configuration update request message to the first tag, where the configuration update request message includes the execution command.

Specifically, for an implementation of step 913, refer to step 710 in the method 700.

Optionally, the method further includes step 914: The first tag sends a configuration update complete message to the AMF #3, where the configuration update complete message includes information about an execution result corresponding to the execution command.

Specifically, for an implementation of step 914, refer to step 711 in the method 700.

Step 915: The AMF #3 sends an inventory command response message to the TMF, where the response message includes the information that is about the execution result of the first tag and that is received in step 814.

For example, the inventory command response message carries the inventory identifier.

In a possible implementation, the TMF may determine, based on the inventory identifier carried in the inventory command response message, that the inventory command response message is a response message of the inventory request message. In another possible implementation, because the application function network element sends the inventory indication information (that is, the inventory object) to the TMF, if the tag identifier carried in the inventory command response message or the inventory result response message that is received by the TMF and that is sent by the AMF #3 meets at least one of the inventory indication information, the TMF may determine that the message is a response message of the inventory request message. In other words, according to the technical solution provided in this application, the TMF may implement management and inventory on the tag.

Step 916: The TMF determines that inventory on the first tag is completed, and sends an inventory request message to the AMF #4.

For example, the TMF may send an inventory request to the AMF #4, where the inventory request includes indication information #3, and the indication information #3 indicates at least one of the following content: indicates that a target operation is completed on the first tag, indicates to query for an identifier of a next tag, or indicates the tag to perform a next random access procedure.

Step 917: The AMF #4 sends the inventory request message to the relay device.

For example, the AMF #4 may send the inventory request to the relay device, where the inventory request includes the indication information #3, and the indication information #3 indicates at least one of the following content: indicates that the target operation is completed on the first tag, indicates to query for the identifier of the next tag, or indicates the tag to perform the next random access procedure. For example, the inventory request may be encapsulated in a configuration update request message, and the configuration update request message is sent to the relay device.

Step 918: The relay device performs inventory on the next tag.

Specifically, for an implementation of step 914, refer to step 713 in the method 700.

Step 919: The relay device determines that operations on all tags are completed.

The foregoing process (for example, steps 906 to 918) is cyclically performed until the relay device does not receive, within configured time (for example, within a first time period), a random access request message initiated by any tag. In this case, the relay device determines that inventory on all the tags in the coverage area of the relay device is completed. Alternatively, it may be understood as that the relay device determines that the query, the command execution, or the target operation is completed on the tags in the coverage area of the relay device.

Step 920: The relay device sends an inventory complete message to the AMF #4.

For example, the inventory complete message indicates that for the current inventory initiated by the AF, the relay device completes inventory on tags that can be found.

Step 921: The AMF #4 sends an inventory report message to the TMF.

For example, the message may include an identifier of one or more tags. For another example, the message may alternatively include information about an execution result corresponding to an identifier of one or more tags.

Step 923: The TMF sends the inventory report message to the AF.

For example, the message may include the identifier of the one or more tags. For another example, the message may alternatively include the information about the execution result corresponding to the identifier of the one or more tags.

In a possible implementation, the TMF may further send the inventory report message to the AF.

According to the foregoing technical solution, in this application, because the relay device may communicate with a core network element via a radio access network device and the access and mobility management function network element, the relay device may obtain an identifier of a terminal device in the coverage area of the relay device, and send the identifier to a second network element via the access and mobility management function network element, and the second network element may implement the inventory on the terminal device. In this way, communication between the terminal device and a network device is implemented in a large-coverage, large-scale, and large-range scenario.

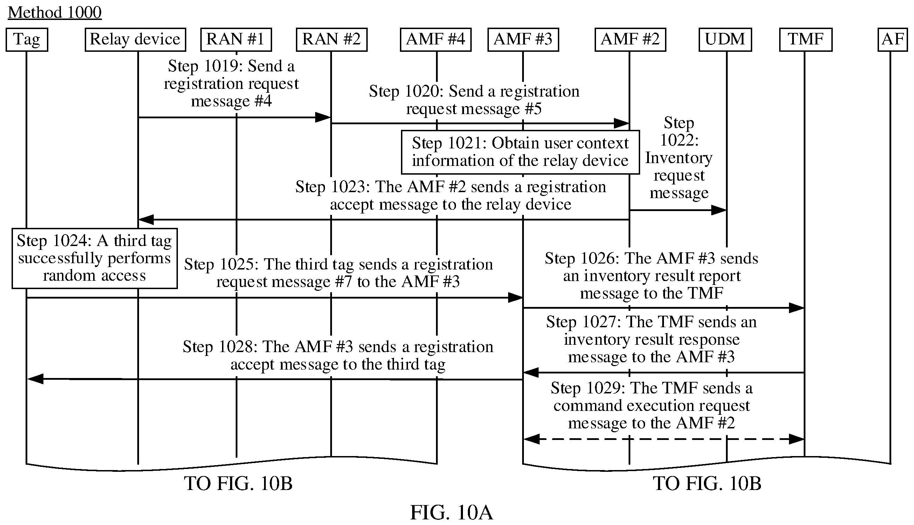

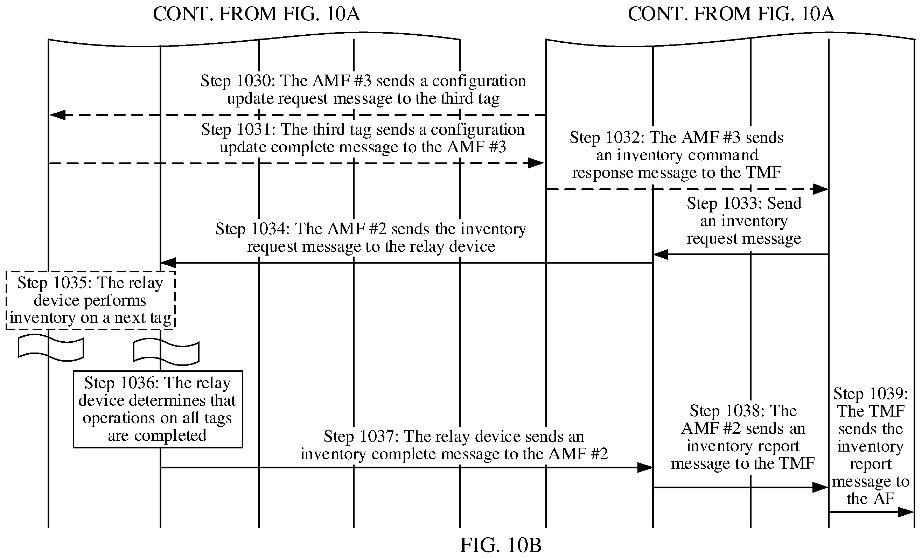

FIG. 10A and FIG. 10B are a schematic flowchart of still another communication method 1000 according to this application. **In** the method 1000, it is assumed that an AMF that provides a service for a relay device and an AMF that provides a service for a tag are different. That is, the method 1000 is applicable to the architecture in (b) in FIG. 4. **In** addition, in the method 1000, it is further considered that if the relay device moves in a tag inventory process, a RAN that provides a service for the relay device and the AMF that provides the service for the relay device change. For example, the RAN that provides the service for the relay device is switched from a RAN #1 to a RAN #2, and similarly, the AMF that provides the service for the relay device is switched from an AMF #4 to an AMF #2. The following describes in detail how to continue to complete inventory after the relay device moves in the tag inventory process. The following describes steps shown in FIG. 10A and FIG. 10B. The method includes the following steps.

For step 1001 to step 1018, refer to step 901 to step 918 in the method 900. Details are not described again.

In this embodiment, it is assumed that when the relay device performs inventory on a third tag, a location of the relay device moves, and moves out of a coverage area of the current RAN #1 (which may alternatively be understood as a source RAN).

In this case, step 1019 is performed. The relay device sends a registration request message #4 to the RAN #2, where the registration request message #4 includes an identifier of the relay device.

For example, the identifier is a subscription concealed identifier (subscription concealed identifier, SUCI) of the relay device, a 5G globally unique temporary UE identity (5th generation globally unique temporary UE identity, 5G-GUTI) of the relay device, or the like.

Step 1020: The RAN #2 sends a registration request message #5 to the AMF #2 (which may alternatively be understood as a target AMF).

Step 1021: The AMF #2 obtains user context information of the relay device from the AMF #4 (which may alternatively be understood as a source AMF) based on the identifier of the relay device.

In this embodiment, the user context information includes inventory request information. Optionally, the inventory message may include at least one of the following content: the identifier of the relay device, where for example, the identifier may be a generic public subscription identifier (generic public subscription identifier, GPSI) of the relay device; an inventory object; or indication information #2, where the indication information #2 indicates a command that needs to be executed on the tag and a command execution parameter. For details, refer to the descriptions in step 702 in the method 700.

Step 1022: The AMF #2 registers with a UDM.

For example, the AMF #2 may send a registration request message #6 (for example, Nudm_UECM_Registration) to the UDM, where the registration request message #6 includes an identifier of the AMF #2 and the identifier of the relay device.

Step 1023: The AMF #2 sends a registration accept message to the relay device.

Step 1024: The third tag successfully performs random access.

Specifically, for a random access process of the third tag, refer to step 707 in the method 700.

Step 1025: The third tag sends a registration request message #7 to an AMF #3, where the registration request message #7 includes an identifier of the third tag.

Optionally, the registration request message #7 may further include a type of the third tag. For example, the type of the third tag is a passive-type tag, or the type of the third tag is a semi-passive-type tag.

Specifically, for an implementation of step 1025, refer to the descriptions in step 708 in the method 700.

Step 1026: The AMF #3 sends an inventory result report message to a TMF.

For example, the inventory result report may include the identifier of the third tag.

Optionally, the inventory result further includes an inventory identifier. Optionally, the TMF may initiate an authentication procedure to the third tag.

Step 1027: The TMF sends an inventory result response message to the AMF #3.

For example, the TMF may determine, based on that the identifier of the third tag (or the inventory identifier) belongs to a range of the inventory object, that the third tag is the tag requested in the inventory request in step 1002.

Step 1028: The AMF #3 sends a registration accept message to the third tag, where the registration accept message indicates that the third tag is successfully registered.

Specifically, for an implementation of step 1028, refer to step 709 in the method 700.

Optionally, the method further includes step 1029: The TMF sends a command execution request message to the AMF #2, to indicate to execute the command on the tag.

If the TMF receives the indication information #2 from an AF in step 1002, in this step, the TMF sends the command execution request message to the AMF #2.

Optionally, the request message further includes the execution parameter corresponding to the execution command.

Optionally, the method further includes step 1030: The AMF #3 sends a configuration update request message to the third tag, where the configuration update request message includes the execution command.

Specifically, for an implementation of step 1030, refer to step 710 in the method 700.

Optionally, the method further includes step 1031: The third tag sends a configuration update complete message to the AMF #3, where the configuration update complete message includes information about an execution result corresponding to the execution command.

Specifically, for an implementation of step 1031, refer to step 711 in the method 700.

Step 1032: The AMF #3 sends an inventory command response message to the TMF, where the response message includes the information that is about the execution result of the third tag and that is received in step 1031.

Step 1033: The TMF determines that the inventory on the third tag is completed, and sends an inventory request message to the AMF #2.

For example, the TMF may send an inventory request to the AMF #2, where the inventory request includes indication information #3, and the indication information #3 indicates at least one of the following content: indicates that a target operation is completed on the third tag, indicates to query for an identifier of a next tag, or indicates the tag to perform a next random access procedure.

Step 1034: The AMF #2 sends the inventory request message to the relay device.

For example, the AMF #2 may send the inventory request to the relay device, where the inventory request includes the indication information #3, and the indication information #3 indicates at least one of the following content: indicates that the target operation is completed on the third tag, indicates to query for the identifier of the next tag, or indicates the tag to perform the next random access procedure. For example, the inventory request may be encapsulated in a configuration update request message, and the configuration update request message is sent to the relay device.

Step 1035: The relay device performs inventory on the next tag.

Specifically, for an implementation of step 1035, refer to step 713 in the method 700.

Step 1036: The relay device determines that operations on all tags are completed.

The foregoing process (for example, steps 1024 to 1035) is cyclically performed until the relay device does not receive, within configured time (for example, within a first time period), a random access request message initiated by any tag. In this case, the relay device determines that inventory on all the tags in a coverage area of the relay device is completed. Alternatively, it may be understood as that the relay device determines that the query, the command execution, or the target operation is completed on the tags in the coverage area of the relay device.

Step 1037: The relay device sends an inventory complete message to the AMF #2.

For example, the inventory complete message indicates that for the current inventory initiated by the AF, the relay device completes inventory on tags that can be found.

Step 1038: The AMF #2 sends an inventory report message to the TMF.

For example, the message may include an identifier of one or more tags. For another example, the message may alternatively include information about an execution result corresponding to an identifier of one or more tags.

Step 1039: The TMF sends the inventory report message to the AF.

For example, the message may include the identifier of the one or more tags. For another example, the message may alternatively include the information about the execution result corresponding to the identifier of the one or more tags.

In a possible implementation, the TMF may further send the inventory report message to the AF.

According to the foregoing technical solution, in this embodiment, if the AMF that provides the service for the relay device and the AMF that provides the service for the tag are different, and it is further considered that the location of the relay device moves in the tag inventory process, the relay device may switch the RAN and the AMF, and the target AMF may obtain the context information of the relay device from the source AMF, so that a core network element can continue to perform inventory on the tag. In this way, communication between a terminal device and a network device can be implemented in a large-coverage scenario.

It may be understood that the examples in FIG. 5 to FIG. 10A and FIG. 10B in embodiments of this application are merely intended to help a person skilled in the art understand embodiments of this application, but are not intended to limit embodiments of this application to specific scenarios in the examples. A person skilled in the art definitely can make various equivalent modifications or variations based on the examples in FIG. 5 to FIG. 10A and FIG. 10B, and such modifications or variations also fall within the scope of embodiments of this application.

It may be further understood that some optional features in embodiments of this application may be independent of another feature in some scenarios, or may be combined with another feature in some scenarios. This is not limited.

It may be further understood that embodiments described in this application may be independent solutions, or may be combined based on internal logic. All these solutions fall within the protection scope of this application. In addition, explanations or descriptions of the terms in embodiments may be mutually referenced or explained in various embodiments. This is not limited.

It may be understood that in this application, "if" means that an apparatus performs corresponding processing in an objective case. The term is not intended to limit time, does not require a determining action when the apparatus is implemented, and does not imply that there is any other limitation.

The foregoing mainly describes the solutions provided in embodiments of this application from a perspective of interaction between nodes. It may be understood that, to implement the foregoing functions, the nodes, for example, the access and mobility management function network element, the relay device, and the tag management function network element, include corresponding hardware structures and/or software modules for performing the functions. A person skilled in the art may be aware that, in combination with units and algorithm steps of the examples described in embodiments disclosed in this specification, this application can be implemented by hardware or a combination of hardware and computer software. Whether a function is performed by hardware or hardware driven by computer software depends on a particular application and a design constraint condition of the technical solutions. A person skilled in the art may use different methods to implement the described functions for each particular application, but it should not be considered that the implementation goes beyond the scope of this application.

In embodiments of this application, division into functional modules may be performed on the access and mobility management function network element and the involved core network elements based on the foregoing method examples. For example, division into functional modules may be performed based on corresponding functions, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used. An example in which the division into the functional modules is performed based on the corresponding functions is used below for description.

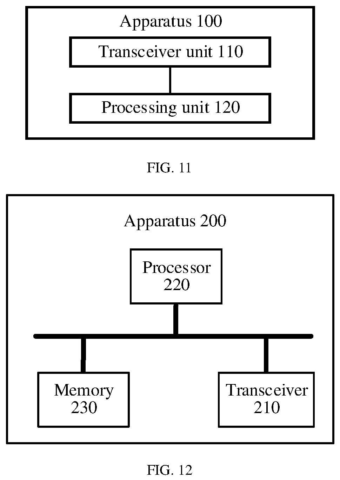

FIG. 11 is a block diagram of a communication apparatus 100 according to an embodiment of this application. As shown in the figure, the apparatus 100 may include a transceiver unit 110 and a processing unit 120.

In a possible design, the apparatus 100 may be the relay device in the foregoing method embodiments, or may be a chip configured to implement functions of the relay device in the foregoing method embodiments. The apparatus 100 may correspond to the relay device in the method 500 to the method 1000 according to embodiments of this application.

For example, the apparatus 100 may correspond to the relay device in the method 500, the method 700, and the method 800 according to embodiments of this application, and the apparatus 100 may perform the steps corresponding to the relay device in the method 500, the method 700, and the method 800 in embodiments of this application.

In an implementation, the transceiver unit is configured to receive a first non-access stratum message from a first access and mobility management function network element via a first radio access network device. The processing unit is configured to control, based on the first non-access stratum message, the transceiver unit to send radio frequency information to terminal devices in a coverage area of the apparatus. The transceiver unit is configured to receive a second non-access stratum message from a first terminal device, where the second non-access stratum message carries an identifier of the first terminal device. The transceiver unit is configured to send the second non-access stratum message to the first access and mobility management function network element via the first radio access network device.

In a possible implementation, the transceiver unit is configured to send a first radio resource control message to the first radio access network device, where the first radio resource control message carries a registration request message and first indication information.

In a possible implementation, the transceiver unit is configured to receive a third non-access stratum message from the first access and mobility management function network element via the first radio access network device. The transceiver unit is configured to send the third non-access stratum message to the first terminal device. The transceiver unit is configured to receive a fourth non-access stratum message from the first terminal device. The transceiver unit is configured to send the fourth non-access stratum message to the first access and mobility management function network element via the first radio access network device.

In a possible implementation, the transceiver unit is configured to receive third indication information from the first access and mobility management function network element via the first radio access network device. The transceiver unit is configured to receive a fifth non-access stratum message from a second terminal device. The transceiver unit is configured to send the fifth non-access stratum message to the first access and mobility management function network element via the first radio access network device.

In a possible implementation, the apparatus is handed over from the first radio access network device to a second radio access network device. The transceiver unit is configured to send a second radio resource control message to the second radio access network device, where the second radio resource control message carries the registration request message and the first indication information. The transceiver unit is configured to receive a registration accept message from a second access and mobility management function network element.

For example, the apparatus 100 may correspond to the relay device in the method 600, the method 900, and the method 1000 according to embodiments of this application, and the apparatus 100 may perform the steps corresponding to the relay device in the method 600, the method 900, and the method 1000 in embodiments of this application.

In a possible implementation, the transceiver unit is configured to receive a first non-access stratum message from a fourth access and mobility management function network element via a first radio access network device. The processing unit is configured to control, based on the first non-access stratum message, the transceiver unit to send radio frequency information to terminal devices in a coverage area of the apparatus. The transceiver unit is configured to receive a second non-access stratum message from a first terminal device. The transceiver unit is configured to send the second non-access stratum message to a third access and mobility management function network element via the first radio access network device.

In a possible implementation, the transceiver unit is configured to receive a third non-access stratum message from the third access and mobility management function network element via the first radio access network device. The transceiver unit is configured to send the third non-access stratum message to the first terminal device. The transceiver unit is configured to receive a fourth non-access stratum message from the first terminal device, where the fourth non-access stratum message carries information about an execution result corresponding to a target operation performed on the first terminal device. The transceiver unit is configured to send the fourth non-access stratum message to the third access and mobility management function network element via the first radio access network device.

In a possible implementation, the transceiver unit is configured to receive third indication information from the fourth access and mobility management function network element via the first radio access network device. The transceiver unit is configured to receive a fifth non-access stratum message from a second terminal device, where the fifth non-access stratum message carries an identifier of the second terminal device. The transceiver unit is configured to send the fifth non-access stratum message to the third access and mobility management function network element via the first radio access network device.

In a possible design, the apparatus 100 may be the first access and mobility management function network element (for example, the AMF #1) in the foregoing method embodiments, or may be a chip configured to implement functions of the first access and mobility management function network element in the foregoing method embodiments. It should be understood that the apparatus 100 may correspond to the first access and mobility management function network element or the AMF #1 in the method 500, the method 700, and the method 800 according to embodiments of this application, and the apparatus 100 may perform the steps corresponding to the first access and mobility management function network element or the AMF #1 in the method 500 to the method 800 in embodiments of this application.

In a possible implementation, the transceiver unit is configured to receive a seventh non-access stratum message from a first network element, where the seventh non-access stratum message is used to request to obtain an identifier of a terminal device. The processing unit is configured to control, based on an identifier of a relay device, the transceiver unit to send a first non-access stratum message to the relay device. The transceiver unit is configured to receive a second non-access stratum message from a first terminal device via the relay device. The transceiver unit is configured to send an eighth non-access stratum message to the first network element, where the eighth non-access stratum message carries an identifier of the first terminal device.

In a possible implementation, that the transceiver unit is configured to receive a second non-access stratum message from a first terminal device via the relay device includes: The transceiver unit is configured to receive the second non-access stratum message from the first terminal device via the relay device and a first radio access network device.

In a possible implementation, the transceiver unit is configured to send a third non-access stratum message to the relay device, where the third non-access stratum message carries second indication information. The transceiver unit is configured to receive a fourth non-access stratum message from the relay device.

In a possible implementation, the transceiver unit is configured to send third indication information to the relay device. The transceiver unit is configured to receive a fifth non-access stratum message from a second terminal device via the relay device.

In a possible implementation, the transceiver unit is configured to receive fourth indication information from the relay device.

In a possible implementation, the transceiver unit is configured to send context information of the relay device to a second access and mobility management function network element.

In a possible design, the apparatus 100 may be the first radio access network device (for example, the RAN #1) in the foregoing method embodiments, or may be a chip configured to implement functions of the first radio access network device in the foregoing method embodiments. It should be understood that the apparatus 100 may correspond to the first radio access network device or the RAN #1 in the method 500, the method 700, and the method 800 according to embodiments of this application, and the apparatus 100 may perform the steps corresponding to the first radio access network device or the RAN #1 in the method 500 to the method 800 in embodiments of this application.

In a possible implementation, the transceiver unit is configured to receive a first radio resource control message from a relay device, where the first radio resource control message carries a registration request message and first indication information. The transceiver unit is configured to send the registration request message to a first access and mobility management function network element.

In a possible implementation, the transceiver unit is configured to receive a first non-access stratum message from the first access and mobility management function network element. The transceiver unit is configured to send the first non-access stratum message to the relay device. The transceiver unit is configured to receive a second non-access stratum message from the relay device, where the second non-access stratum message carries an identifier of a first terminal device, and the first terminal device is a terminal device that successfully performs random access and that is in terminal devices in a coverage area of the relay device. The processing unit is configured to determine to send the second non-access stratum message to the first access and mobility management function network element.

In a possible design, the apparatus 100 may be the fourth access and mobility management function network element (for example, the AMF #4) in the foregoing method embodiments, or may be a chip configured to implement functions of the fourth access and mobility management function network element in the foregoing method embodiments. It should be understood that the apparatus 100 may correspond to the fourth access and mobility management function network element or the AMF #4 in the method 600, the method 900, and the method 1000 according to embodiments of this application, and the apparatus 100 may perform the steps corresponding to the fourth access and mobility management function network element or the AMF #4 in the method 600, the method 900, and the method 1000 in embodiments of this application.

In a possible implementation, the transceiver unit is configured to: receive a seventh non-access stratum message from a second network element, and control the transceiver unit to send a first non-access stratum message to a relay device.

In a possible implementation, the transceiver unit is configured to receive a third non-access stratum message from the second network element. The transceiver unit is configured to send the third non-access stratum message to a first terminal device via the relay device.

In a possible implementation, the transceiver unit is configured to send third indication information to the relay device. The transceiver unit is configured to receive a fifth non-access stratum message from a second terminal device via the relay device.

In a possible implementation, the transceiver unit is configured to receive fourth indication information from the relay device. The transceiver unit is configured to send a ninth non-access stratum message to the second network element.

In a possible implementation, the apparatus is connected to a first radio access network device, and the first radio access network device provides a service for the relay device. The transceiver unit is configured to send context information of the relay device to a second access and mobility management function network element.

In a possible design, the apparatus 100 may be the tag management function network element (for example, the TMF) in the foregoing method embodiments, or may be a chip configured to implement functions of the tag management function network element in the foregoing method embodiments. It should be understood that the apparatus 100 may correspond to the tag management function network element or the TMF in the method 600, the method 900, and the method 1000 according to embodiments of this application, and the apparatus 100 may perform the steps corresponding to the tag management function network element or the TMF in the method 600, the method 900, and the method 1000 in embodiments of this application.

In a possible implementation, the transceiver unit is configured to receive a tenth non-access stratum message from an application function network element. The processing unit is configured to determine, based on an identifier of a relay device, that an access and mobility management function network element serving the relay device is a fourth access and mobility management function network element. The transceiver unit is configured to send a seventh non-access stratum message to the fourth access and mobility management function network element. The transceiver unit is configured to receive a second non-access stratum message from a third access and mobility management function network element.

In a possible implementation, the processing unit is configured to determine, based on an inventory identifier, that the second non-access stratum message is a response message corresponding to the seventh non-access stratum message.

In a possible implementation, if the processing unit determines that an identifier of a first terminal device meets at least one of indication information, the processing unit determines that the second non-access stratum message is the response message corresponding to the seventh non-access stratum message.

In a possible implementation, the transceiver unit is configured to send a third non-access stratum message to the fourth access and mobility management function network element, where the third non-access stratum message carries second indication information. The transceiver unit is configured to receive a fourth non-access stratum message from the third access and mobility management function network element.

In a possible implementation, the transceiver unit is configured to send third indication information to the fourth access and mobility management function network element. The transceiver unit is configured to receive a fifth non-access stratum message from the third access and mobility management function network element.

In a possible implementation, the transceiver unit is configured to receive a ninth non-access stratum message from the fourth access and mobility management function network element.

It should be further understood that the apparatus 100 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 100 may specifically be the relay device, the first access and mobility management function network element, the fourth access and mobility management function network element, or the tag management function network element in the foregoing embodiments, and may be configured to perform the procedures and/or steps corresponding to the relay device, the first access and mobility management function network element, the fourth access and mobility management function network element, or the tag management function network element in the foregoing method embodiments.

The apparatus 100 in the foregoing solutions has a function of implementing the corresponding steps performed by the relay device in the foregoing methods, or the apparatus 100 in the foregoing solutions has a function of implementing the corresponding steps performed by the first access and mobility management function network element, the fourth access and mobility management function network element, or the tag management function network element in the foregoing methods. The function may be implemented by hardware, or may be implemented by hardware executing corresponding software. The hardware or the software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit may be replaced with a processor, to respectively perform receiving and sending operations and related processing operations in the method embodiments.

**In** addition, the transceiver unit 110 may alternatively be a transceiver circuit (for example, may include a receiving circuit and a sending circuit), and the processing unit may be a processing circuit.

It should be noted that the apparatus in FIG. 11 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit that is integrated on the chip. This is not limited herein.

FIG. 12 is a block diagram of a communication apparatus 200 according to an embodiment of this application. As shown in the figure, the apparatus 200 includes at least one processor 220. The processor 220 is coupled to a memory, and is configured to execute instructions stored in the memory, to send a signal and/or receive a signal. Optionally, the device 200 further includes the memory 230, configured to store the instructions. Optionally, the device 200 further includes a transceiver 210, and the processor 220 controls the transceiver 210 to send the signal and/or receive the signal.

It should be understood that the processor 220 and the memory 230 may be combined into one processing device, and the processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a transceiver (or referred to as a receiver machine) and a transmitter (or referred to as a transmitter machine). The transceiver may further include an antenna, and there may be one or more antennas. The transceiver 210 may be a communication interface or an interface circuit.

Specifically, the transceiver 210 in the device 200 may correspond to the transceiver unit 110 in the device 100, and the processor 220 in the device 200 may correspond to the processing unit 120 in the device 200.

**In** a solution, the apparatus 200 is configured to implement operations performed by the relay device in the foregoing method embodiments.

For example, the processor 220 is configured to execute a computer program or the instructions stored in the memory 230, to implement the related operations of the relay device in the foregoing method embodiments, for example, the method performed by the relay device in any one of the embodiments shown in FIG. 5 to FIG. 10A and FIG. 10B.

**In** a solution, the apparatus 200 is configured to implement operations performed by the first access and mobility management function network element (for example, the AMF #1) in the foregoing method embodiments.

For example, the processor 220 is configured to execute a computer program or the instructions stored in the memory 230, to implement the related operations of the first access and mobility management function network element in the foregoing method embodiments, for example, the method performed by the first access and mobility management function network element in any one of the embodiments shown in FIG. 5 to FIG. 10A and FIG. 10B.

**In** a solution, the apparatus 200 is configured to implement operations performed by the fourth access and mobility management function network element (for example, the AMF #4) in the foregoing method embodiments.

For example, the processor 220 is configured to execute a computer program or the instructions stored in the memory 230, to implement the related operations of the fourth access and mobility management function network element in the foregoing method embodiments, for example, the method performed by the fourth access and mobility management function network element in any one of the embodiments shown in FIG. 5 to FIG. 10A and FIG. 10B.

**In** a solution, the apparatus 200 is configured to implement operations performed by the tag management function network element (for example, the TMF) in the foregoing method embodiments.

For example, the processor 220 is configured to execute a computer program or the instructions stored in the memory 230, to implement the related operations of the tag management function network element in the foregoing method embodiments, for example, the method performed by the tag management function network element in any one of the embodiments shown in FIG. 5 to FIG. 10A and FIG. 10B.

It should be understood that a specific process in which the transceiver and the processor perform the corresponding steps is described in detail in the foregoing method embodiments. For brevity, details are not described herein again.

In an implementation process, the steps in the foregoing methods may be implemented by using a hardware integrated logic circuit in the processor or by using instructions in a form of software. The steps in the methods disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor. To avoid repetition, details are not described herein again.

It should be noted that the processor in embodiments of this application may be an integrated circuit chip, and has a signal processing capability. In an implementation process, the steps in the foregoing method embodiments may be implemented by using a hardware integrated logic circuit in the processor or by using instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The methods, steps, and logical block diagrams that are disclosed in embodiments of this application may be implemented or performed. The general-purpose processor may be a microprocessor, or the processor may be any conventional processor or the like. The steps in the methods disclosed with reference to embodiments of this application may be directly performed by a hardware decoding processor, or may be performed by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include but is not limited to these memories and any memory of another appropriate type.

According to the methods provided in embodiments of this application, this application further provides a computer program product. The computer program product stores computer program code. When the computer program code is run on a computer, the computer is enabled to perform the method performed by the relay device in any one of the embodiments of the method 500 to the method 1000.

For example, when the computer program code is executed by the computer, the computer is enabled to implement the method performed by the first access and mobility management function network element in the embodiments of the method 500, the method 700, and the method 800.

For another example, when the computer program code is executed by the computer, the computer is enabled to implement the method performed by the fourth access and mobility management function network element in the embodiments of the method 600, the method 900, and the method 1000.

For still another example, when the computer program code is executed by the computer, the computer is enabled to implement the method performed by the tag management function network element in the embodiments of the method 500 to the method 1000.

According to the methods provided in embodiments of this application, this application further provides a computer-readable medium. The computer-readable medium stores program code. When the program code is run on a computer, the computer is enabled to perform the method performed by the relay device, the first access and mobility management function network element, the fourth access and mobility management function network element, or the tag management function network element in the embodiments of the method 500 to the method 1000.

According to the methods provided in embodiments of this application, this application further provides a communication system. The system includes a relay device, a first access and mobility management function network element, and a first radio access network device. The relay device is configured to perform steps corresponding to the relay device in the embodiments of the method 500, the method 700, and the method 800. The first access and mobility management function network element is configured to perform steps corresponding to the first access and mobility management function network element in the embodiments of the method 500, the method 700, and the method 800. The first radio access network device is configured to receive a first radio resource control message from the relay device, where the first radio resource control message carries a registration request message and first indication information, the first indication information indicates that the relay device supports communication with an ambient internet of things terminal device, and the registration request message is used to request to register with an access and mobility management function network element. The first radio access network device is configured to select, for the relay device based on the first indication information, the first access and mobility management function network element that supports communication with the ambient terminal device. The first radio access network device is configured to send the registration request message to the first access and mobility management function network element.

In a possible implementation, the first radio access network device is further configured to receive a first non-access stratum message from the first access and mobility management function network element, where the first non-access stratum message is used to request to obtain an identifier of a terminal device, and the terminal device includes one or more terminal devices. The first radio access network device is configured to send the first non-access stratum message to the relay device. The first radio access network device is configured to receive a second non-access stratum message from the relay device, where the second non-access stratum message carries an identifier of a first terminal device, and the first terminal device is a terminal device that successfully performs random access and that is in terminal devices in a coverage area of the relay device. The first radio access network device is configured to determine to send the second non-access stratum message to the first access and mobility management function network element.

According to the methods provided in embodiments of this application, this application further provides another communication system. The system includes a third access and mobility management function network element, a fourth access and mobility management function network element, and a second network element. The third access and mobility management function network element and the fourth access and mobility management function network element are configured to perform steps corresponding to the third access and mobility management function network element and the fourth access and mobility management function network element in the method 600, the method 900, and the method 100. The second network element is configured to perform steps corresponding to the tag management function network element in the method 600, the method 900, and the method 100.

In a possible implementation, the system further includes a relay device, and the relay device is configured to perform steps corresponding to the relay device in the method 600, the method 900, and the method 100.

For explanations and beneficial effects of related content of any one of the apparatuses provided above, refer to the corresponding method embodiment provided above. Details are not described herein again.

All or some of the foregoing embodiments may be implemented by software, hardware, firmware, or any combination thereof. When the software is used to implement embodiments, all or some of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

In the foregoing apparatus embodiments, corresponding modules or units perform corresponding steps. For example, the transceiver unit (transceiver) performs a receiving or sending step in the method embodiments, and the processing unit (processor) may perform steps other than the sending and receiving steps. For a function of a specific unit, refer to a corresponding method embodiment. There may be one or more processors.

Terms such as "component", "module", and "system" used in this specification are for representing a computer-related entity, hardware, firmware, a combination of hardware and software, software, or software being executed. For example, the component may be, but is not limited to, a process that is run on a processor, the processor, an object, an executable file, an execution thread, a program, and/or a computer. As illustrated by using figures, both a computing device and an application that is run on the computing device may be components. One or more components may reside within a process and/or an execution thread, and the component may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system, in a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by the hardware or the software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, device, and unit, refer to a corresponding process in the foregoing method embodiments, and details are not described herein again.

In several embodiments provided in this application, it should be understood that the disclosed system, device, and method may be implemented in other manners. For example, the described device embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual needs to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a relay device, a first non-access stratum message from a first access and mobility management function network element via a first radio access network device, wherein the first non-access stratum message is used to request to obtain an identifier of a terminal device, and the terminal device comprises one or more terminal devices;
sending, by the relay device, radio frequency information to terminal devices in a coverage area of the relay device based on the first non-access stratum message, wherein the radio frequency information is used to provide an excitation signal for the terminal devices;
receiving, by the relay device, a second non-access stratum message from a first terminal device, wherein the second non-access stratum message carries an identifier of the first terminal device, and the first terminal device is a terminal device that successfully performs random access and that is in the terminal devices in the coverage area of the relay device; and
sending, by the relay device, the second non-access stratum message to the first access and mobility management function network element via the first radio access network device.

2. The method according to claim 1, wherein the method further comprises:
sending, by the relay device, a first radio resource control message to the first radio access network device, wherein the first radio resource control message carries a registration request message and first indication information, the first indication information indicates that the relay device supports communication with an ambient internet of things terminal device, and the registration request message is used to request to register with an access and mobility management function network element, wherein
the first access and mobility management function network element is an access and mobility management function network element that is selected by the first radio access network device for the relay device based on the first indication information and that supports communication with the ambient internet of things terminal device.

3. The method according to claim 1 or 2, wherein the method further comprises:
receiving, by the relay device, a third non-access stratum message from the first access and mobility management function network element via the first radio access network device, wherein the third non-access stratum message carries second indication information, and the second indication information indicates to perform a target operation on the first terminal device;
sending, by the relay device, the third non-access stratum message to the first terminal device;
receiving, by the relay device, a fourth non-access stratum message from the first terminal device, wherein the fourth non-access stratum message carries information about an execution result corresponding to the target operation performed on the first terminal device; and
sending, by the relay device, the fourth non-access stratum message to the first access and mobility management function network element via the first radio access network device.

4. The method according to any one of claims 1 to 3, wherein the method further comprises:
receiving, by the relay device, third indication information from the first access and mobility management function network element via the first radio access network device, wherein the third indication information indicates at least one of the following content:
indicates that the target operation is completed on the first terminal device, indicates to query for an identifier of a next terminal device, or indicates the terminal device to perform a next random access procedure;
receiving, by the relay device, a fifth non-access stratum message from a second terminal device, wherein the fifth non-access stratum message carries an identifier of the second terminal device; and
sending, by the relay device, the fifth non-access stratum message to the first access and mobility management function network element via the first radio access network device.

5. The method according to any one of claims 1 to 4, wherein the method further comprises:
performing, by the relay device, a handover from the first radio access network device to a second radio access network device;
sending, by the relay device, a second radio resource control message to the second radio access network device, wherein the second radio resource control message carries the registration request message and the first indication information, the first indication information indicates that the relay device supports the communication with the ambient internet of things terminal device, and the registration request message is used to request to register with the access and mobility management function network element; and
receiving, by the relay device, a registration accept message from a second access and mobility management function network element, wherein the second access and mobility management function network element is an access and mobility management function network element that is selected by the second radio access network for the relay device based on the first indication information after the relay device is handed over from the first radio access network device to the second radio access network device and that supports communication with the ambient internet of things terminal device.

6. A communication method, comprising:
receiving, by a first access and mobility management function network element, a seventh non-access stratum message from a first network element, wherein the seventh non-access stratum message is used to request to obtain an identifier of a terminal device, the seventh non-access stratum message carries an identifier of a relay device, and the terminal device comprises one or more terminal devices;
sending, by the first access and mobility management function network element, a first non-access stratum message to the relay device based on the identifier of the relay device, wherein the first non-access stratum message is used to request to obtain the identifier of the terminal device;
receiving, by the first access and mobility management function network element, a second non-access stratum message from a first terminal device via the relay device, wherein the second non-access stratum message carries an identifier of the first terminal device, and the first terminal device is a terminal device that successfully performs random access and that is in terminal devices in a coverage area of the relay device; and
sending, by the first access and mobility management function network element, an eighth non-access stratum message to the first network element, wherein the eighth non-access stratum message carries the identifier of the first terminal device.

7. The method according to claim 1, wherein the receiving, by the first access and mobility management function network element, a second non-access stratum message from a first terminal device via the relay device comprises:
receiving, by the first access and mobility management function network element, the second non-access stratum message from the first terminal device via the relay device and a first radio access network device, wherein the first access and mobility management function network element is an access and mobility management function network element that is selected by the first radio access network device for the relay device and that supports communication with an ambient internet of things terminal device.

8. The method according to claim 6 or 7, wherein the seventh non-access stratum message further carries second indication information, the second indication information indicates to perform a target operation on the first terminal device, and the method further comprises:
sending, by the first access and mobility management function network element, a third non-access stratum message to the relay device, wherein the third non-access stratum message carries the second indication information; and
receiving, by the first access and mobility management function network element, a fourth non-access stratum message from the relay device, wherein the fourth non-access stratum message carries information about an execution result corresponding to the target operation performed on the first terminal device.

9. The method according to any one of claims 6 to 8, wherein the method further comprises:
sending, by the first access and mobility management function network element, third indication information to the relay device, wherein the third indication information indicates at least one of the following content: indicates that the target operation is completed on the first terminal device, indicates to query for an identifier of a next terminal device, or indicates the terminal device to perform a next random access procedure; and
receiving, by the first access and mobility management function network element, a fifth non-access stratum message from a second terminal device via the relay device, wherein the fifth non-access stratum message carries an identifier of the second terminal device.

10. The method according to any one of claims 6 to 9, wherein the method further comprises:
receiving, by the first access and mobility management function network element, fourth indication information from the relay device, wherein the fourth indication information indicates that a target operation is completed on the terminal device, wherein
the eighth non-access stratum message further carries information about an execution result corresponding to the target operation performed on the terminal device.

11. The method according to any one of claims 6 to 10, wherein the method further comprises:
sending, by the first access and mobility management function network element, context information of the relay device to a second access and mobility management function network element, wherein the context information comprises the seventh non-access stratum message, wherein
the second access and mobility management function network element is an access and mobility management function network element that is selected by a second radio access network device for the relay device after the relay device is handed over from the first radio access network device to the second radio access network device and that supports communication with the ambient internet of things terminal device.

12. The method according to any one of claims 6 to 11, wherein the first network element is a network exposure function network element, or the first network element is an application function network element.

13. A method of a communication system, comprising:
receiving, by a fourth access and mobility management function network element, a seventh non-access stratum message from a second network element, wherein the seventh non-access stratum message is used to request to obtain an identifier of a terminal device, the seventh non-access stratum message carries an identifier of a relay device, and the terminal device comprises one or more terminal devices;
sending, by the fourth access and mobility management function network element, a first non-access stratum message to the relay device based on the identifier of the relay device, wherein the first non-access stratum message is used to request to obtain the identifier of the terminal device;
receiving, by a third access and mobility management function network element, a second non-access stratum message from a first terminal device via the relay device, wherein the second non-access stratum message carries an identifier of the first terminal device, and the first terminal device is a terminal device that successfully performs random access and that is in terminal devices in a coverage area of the relay device; and
sending, by the third access and mobility management function network element, the second non-access stratum message to the second network element.

14. The method according to claim 13, wherein the fourth access and mobility management function network element is an access and mobility management function network element that supports communication with the relay device.

15. The method according to claim 13 or 14, wherein if the seventh non-access stratum message carries an inventory identifier, the first non-access stratum message carries the inventory identifier, and the second non-access stratum message carries the inventory identifier, wherein the inventory identifier is used by the second network element to determine that the second non-access stratum message is a response message corresponding to the seventh non-access stratum message.

16. The method according to any one of claims 13 to 15, wherein the seventh non-access stratum message further carries second indication information, the second indication information indicates to perform a target operation on the first terminal device, and the method further comprises:
receiving, by the fourth access and mobility management function network element, a third non-access stratum message from the second network element, wherein the third non-access stratum message carries the second indication information;
sending, by the fourth access and mobility management function network element, the third non-access stratum message to the first terminal device via the relay device, wherein the third non-access stratum message carries the second indication information;
receiving, by the third access and mobility management function network element, a fourth non-access stratum message from the first terminal device via the relay device, wherein the fourth non-access stratum message carries information about an execution result corresponding to the target operation performed on the first terminal device; and
sending, by the third access and mobility management function network element, the fourth non-access stratum message to the second network element.

17. The method according to any one of claims 13 to 16, wherein the method further comprises:
sending, by the fourth access and mobility management function network element, third indication information to the relay device, wherein the third indication information indicates at least one of the following content: indicates that the target operation is completed on the first terminal device, indicates to query for an identifier of a next terminal device, or indicates the terminal device to perform a next random access procedure; and
receiving, by the fourth access and mobility management function network element, a fifth non-access stratum message from a second terminal device via the relay device, wherein the fifth non-access stratum message carries an identifier of the second terminal device.

18. The method according to any one of claims 13 to 17, wherein the method further comprises:
receiving, by the fourth access and mobility management function network element, fourth indication information from the relay device, wherein the fourth indication information indicates that a target operation is completed on the terminal device; and
sending, by the fourth access and mobility management function network element, a ninth non-access stratum message to the second network element, wherein the ninth non-access stratum message comprises information about an execution result corresponding to the target operation performed on the terminal device.

19. The method according to any one of claims 13 to 18, wherein the fourth access and mobility management function network element is connected to a first radio access network device, the first radio access network device provides a service for the relay device, and the method further comprises:
sending, by the fourth access and mobility management function network element, context information of the relay device to a second access and mobility management function network element, wherein the context information comprises the seventh non-access stratum message, and the second access and mobility management function network element is a target access and mobility management function network element selected by a second radio access network device for the relay device after the relay device is handed over from the first radio access network device to the second radio access network device; and
receiving, by the second access and mobility management function network element, a sixth non-access stratum message from the relay device, wherein the sixth non-access stratum message carries an identifier of a third terminal device and the inventory identifier, and the inventory identifier is used by the second network element to determine that the second non-access stratum message is the response message corresponding to the seventh non-access stratum message.

20. A communication method, comprising:
receiving, by a second network element, a tenth non-access stratum message from an application function network element, wherein the tenth non-access stratum message is used to request to obtain an identifier of a terminal device, the tenth non-access stratum message carries an identifier of a relay device, and the terminal device comprises one or more target terminal devices;
determining, by the second network element based on the identifier of the relay device, that an access and mobility management function network element serving the relay device is a fourth access and mobility management function network element;
sending, by the second network element, a seventh non-access stratum message to the fourth access and mobility management function network element, wherein the seventh non-access stratum message is used to request to obtain the identifier of the terminal device; and
receiving, by the second network element, a second non-access stratum message from a third access and mobility management function network element, wherein the second non-access stratum message carries an identifier of a first terminal device, and the first terminal device is a terminal device that successfully performs random access and that is in terminal devices in a coverage area of the relay device.

21. The method according to claim 20, wherein the fourth access and mobility management function network element is an access and mobility management function network element that supports communication with the relay device.

22. The method according to claim 20 or 21, wherein if the seventh non-access stratum message carries an inventory identifier, and the second non-access stratum message carries the inventory identifier, the method further comprises:
determining, by the second network element based on the inventory identifier, that the second non-access stratum message is a response message corresponding to the seventh non-access stratum message.

23. The method according to any one of claims 20 to 22, wherein the tenth non-access stratum message further carries inventory indication information, and the inventory indication information comprises at least one of the following content: a value interval of the identifier of the terminal device, an identifier list of the terminal device, an identifier of a group of the terminal device, or information indicating to query for an identifier of any terminal device; and
the method further comprises:
if the second network element determines that the identifier of the first terminal device meets at least one of the indication information, determining, by the second network element, that the second non-access stratum message is the response message corresponding to the seventh non-access stratum message.

24. The method according to any one of claims 20 to 23, wherein the tenth non-access stratum message further carries second indication information, the second indication information indicates to perform a target operation on the first terminal device, and the method further comprises:
sending, by the second network element, a third non-access stratum message to the fourth access and mobility management function network element, wherein the third non-access stratum message carries the second indication information; and
receiving, by the second network element, a fourth non-access stratum message from the third access and mobility management function network element, wherein the fourth non-access stratum message carries information about an execution result corresponding to the target operation of the first terminal device, and the fourth non-access stratum message is sent by the first terminal device to the third access and mobility management function network element via the relay device.

25. The method according to any one of claims 20 to 24, wherein the method further comprises:
sending, by the second network element, third indication information to the fourth access and mobility management function network element, wherein the third indication information indicates at least one of the following content:
indicates that the target operation is completed on the first terminal device, indicates to query for an identifier of a next terminal device, or indicates the terminal device to perform a next random access procedure; and
receiving, by the second network element, a fifth non-access stratum message from the third access and mobility management function network element, wherein the fifth non-access stratum message carries an identifier of a second terminal device, and the fifth non-access stratum message is sent by the second terminal device to the third access and mobility management function network element via the relay device.

26. The method according to any one of claims 20 to 25, wherein the method further comprises:
receiving, by the second network element, a ninth non-access stratum message from the fourth access and mobility management function network element, wherein the ninth non-access stratum message comprises information about an execution result corresponding to the target operation performed on the terminal.

27. The method according to any one of claims 20 to 26, wherein the second network element is a tag management function network element.

28. A communication apparatus, comprising a transceiver unit and a processing unit, wherein
the transceiver unit is configured to receive a first non-access stratum message from a first access and mobility management function network element via a first radio access network device, wherein the first non-access stratum message is used to request to obtain an identifier of a terminal device, and the terminal device comprises one or more terminal devices;
the processing unit is configured to control, based on the first non-access stratum message, the transceiver unit to send radio frequency information to terminal devices in a coverage area of the communication apparatus, wherein the radio frequency information is used to provide an excitation signal for the terminal devices;
the transceiver unit is configured to receive a second non-access stratum message from a first terminal device, wherein the second non-access stratum message carries an identifier of the first terminal device, and the first terminal device is a terminal device that successfully performs random access and that is in the terminal devices in the coverage area of the relay device; and
the transceiver unit is configured to send the second non-access stratum message to the first access and mobility management function network element via the first radio access network device.

29. The apparatus according to claim 28, wherein
the transceiver unit is configured to send a first radio resource control message to the first radio access network device, wherein the first radio resource control message carries a registration request message and first indication information, the first indication information indicates that the relay device supports communication with an ambient internet of things terminal device, and the registration request message is used to request to register with an access and mobility management function network element, wherein
the first access and mobility management function network element is an access and mobility management function network element that is selected by the first radio access network device for the relay device based on the first indication information and that supports communication with the ambient internet of things terminal device.

30. The apparatus according to claim 28 or 29, wherein
the transceiver unit is configured to receive a third non-access stratum message from the first access and mobility management function network element via the first radio access network device, wherein the third non-access stratum message carries second indication information, and the second indication information indicates to perform a target operation on the first terminal device;
the transceiver unit is configured to send the third non-access stratum message to the first terminal device;
the transceiver unit is configured to receive a fourth non-access stratum message from the first terminal device, wherein the fourth non-access stratum message carries information about an execution result corresponding to the target operation performed on the first terminal device; and
the transceiver unit is configured to send the fourth non-access stratum message to the first access and mobility management function network element via the first radio access network device.

31. The apparatus according to any one of claims 28 to 30, wherein
the transceiver unit is configured to receive third indication information from the first access and mobility management function network element via the first radio access network device, wherein the third indication information indicates at least one of the following content:
indicates that the target operation is completed on the first terminal device, indicates to query for an identifier of a next terminal device, or indicates the terminal device to perform a next random access procedure;
the transceiver unit is configured to receive a fifth non-access stratum message from a second terminal device, wherein the fifth non-access stratum message carries an identifier of the second terminal device; and
the transceiver unit is configured to send the fifth non-access stratum message to the first access and mobility management function network element via the first radio access network device.

32. The apparatus according to any one of claims 28 to 31, wherein
the apparatus is handed over from the first radio access network device to a second radio access network device;
the transceiver unit is configured to send a second radio resource control message to the second radio access network device, wherein the second radio resource control message carries the registration request message and the first indication information, the first indication information indicates that the relay device supports the communication with the ambient internet of things terminal device, and the registration request message is used to request to register with the access and mobility management function network element; and
the transceiver unit is configured to receive a registration accept message from a second access and mobility management function network element, wherein the second access and mobility management function network element is an access and mobility management function network element that is selected by the second radio access network for the relay device based on the first indication information after the relay device is handed over from the first radio access network device to the second radio access network device and that supports communication with the ambient internet of things terminal device.

33. A communication apparatus, comprising a transceiver unit and a processing unit, wherein
the transceiver unit is configured to receive a seventh non-access stratum message from a first network element, wherein the seventh non-access stratum message is used to request to obtain an identifier of a terminal device, the seventh non-access stratum message carries an identifier of a relay device, and the terminal device comprises one or more terminal devices;
the processing unit is configured to control, based on the identifier of the relay device, the transceiver unit to send a first non-access stratum message to the relay device, wherein the first non-access stratum message is used to request to obtain the identifier of the terminal device;
the transceiver unit is configured to receive a second non-access stratum message from a first terminal device via the relay device, wherein the second non-access stratum message carries an identifier of the first terminal device, and the first terminal device is a terminal device that successfully performs random access and that is in terminal devices in a coverage area of the relay device; and
the transceiver unit is configured to send an eighth non-access stratum message to the first network element, wherein the eighth non-access stratum message carries the identifier of the first terminal device.

34. The apparatus according to claim 33, wherein that the transceiver unit is configured to receive a second non-access stratum message from a first terminal device via the relay device comprises:
the transceiver unit is configured to receive the second non-access stratum message from the first terminal device via the relay device and a first radio access network device, wherein a first access and mobility management function network element is an access and mobility management function network element that is selected by the first radio access network device for the relay device and that supports communication with an ambient internet of things terminal device.

35. The apparatus according to claim 33 or 34, wherein the seventh non-access stratum message further carries second indication information, and the second indication information indicates to perform a target operation on the first terminal device;
the transceiver unit is configured to send a third non-access stratum message to the relay device, wherein the third non-access stratum message carries the second indication information; and
the transceiver unit is configured to receive a fourth non-access stratum message from the relay device, wherein the fourth non-access stratum message carries information about an execution result corresponding to the target operation performed on the first terminal device.

36. The apparatus according to any one of claims 33 to 35, wherein
the transceiver unit is configured to send third indication information to the relay device, wherein the third indication information indicates at least one of the following content: indicates that the target operation is completed on the first terminal device, indicates to query for an identifier of a next terminal device, or indicates the terminal device to perform a next random access procedure; and
the transceiver unit is configured to receive a fifth non-access stratum message from a second terminal device via the relay device, wherein the fifth non-access stratum message carries an identifier of the second terminal device.

37. The apparatus according to any one of claims 33 to 36, wherein
the transceiver unit is configured to receive fourth indication information from the relay device, wherein the fourth indication information indicates that a target operation is completed on the terminal device.

38. The apparatus according to any one of claims 33 to 37, wherein
the transceiver unit is configured to send context information of the relay device to a second access and mobility management function network element, wherein the context information comprises the seventh non-access stratum message, wherein
the second access and mobility management function network element is an access and mobility management function network element that is selected by a second radio access network device for the relay device after the relay device is handed over from the first radio access network device to the second radio access network device and that supports communication with the ambient internet of things terminal device.

39. The apparatus according to any one of claims 33 to 38, wherein the first network element is a network exposure function network element, or the first network element is an application function network element.

40. A communication apparatus, comprising a transceiver unit and a processing unit, wherein
the transceiver unit is configured to receive a seventh non-access stratum message from a second network element, wherein the seventh non-access stratum message is used to request to obtain an identifier of a terminal device, the seventh non-access stratum message carries an identifier of a relay device, and the terminal device comprises one or more terminal devices; and
the processing unit is configured to control, based on the identifier of the relay device, the transceiver unit to send a first non-access stratum message to the relay device, wherein the first non-access stratum message is used to request to obtain the identifier of the terminal device.

41. The apparatus according to claim 40, wherein the apparatus is an access and mobility management function network element that supports communication with the relay device.

42. The apparatus according to claim 40 or 41, wherein if the seventh non-access stratum message carries an inventory identifier, the first non-access stratum message carries the inventory identifier, and a second non-access stratum message carries the inventory identifier, wherein the inventory identifier is used by the second network element to determine that the second non-access stratum message is a response message corresponding to the seventh non-access stratum message.

43. The apparatus according to any one of claims 40 to 42, wherein the seventh non-access stratum message further carries second indication information, and the second indication information indicates to perform a target operation on a first terminal device;
the transceiver unit is configured to receive a third non-access stratum message from the second network element, wherein the third non-access stratum message carries the second indication information; and
the transceiver unit is configured to send the third non-access stratum message to the first terminal device via the relay device, wherein the third non-access stratum message carries the second indication information.

44. The apparatus according to any one of claims 40 to 42, wherein
the transceiver unit is configured to send third indication information to the relay device, wherein the third indication information indicates at least one of the following content: indicates that the target operation is completed on the first terminal device, indicates to query for an identifier of a next terminal device, or indicates the terminal device to perform a next random access procedure; and
the transceiver unit is configured to receive a fifth non-access stratum message from a second terminal device via the relay device, wherein the fifth non-access stratum message carries an identifier of the second terminal device.

45. The apparatus according to any one of claims 40 to 44, wherein
the transceiver unit is configured to receive fourth indication information from the relay device, wherein the fourth indication information indicates that a target operation is completed on the terminal device; and
the transceiver unit is configured to send a ninth non-access stratum message to the second network element, wherein the ninth non-access stratum message comprises information about an execution result corresponding to the target operation performed on the terminal device.

46. The apparatus according to any one of claims 40 to 45, wherein the apparatus is connected to a first radio access network device, and the first radio access network device provides a service for the relay device; and
the transceiver unit is configured to send context information of the relay device to a second access and mobility management function network element, wherein the context information comprises the seventh non-access stratum message, and the second access and mobility management function network element is an access and mobility management function network element that is selected by a second radio access network device for the relay device after the relay device is handed over from the first radio access network device to the second radio access network device and that supports communication with an ambient terminal device.

47. A communication apparatus, comprising a transceiver unit and a processing unit, wherein
the transceiver unit is configured to receive a tenth non-access stratum message from an application function network element, wherein the tenth non-access stratum message is used to request to obtain an identifier of a terminal device, the tenth non-access stratum message carries an identifier of a relay device, and the terminal device comprises one or more target terminal devices;
the processing unit is configured to determine, based on the identifier of the relay device, that an access and mobility management function network element serving the relay device is a fourth access and mobility management function network element;
the transceiver unit is configured to send a seventh non-access stratum message to the fourth access and mobility management function network element, wherein the seventh non-access stratum message is used to request to obtain the identifier of the terminal device; and
the transceiver unit is configured to receive a second non-access stratum message from a third access and mobility management function network element, wherein the second non-access stratum message carries an identifier of a first terminal device, and the first terminal device is a terminal device that successfully performs random access and that is in terminal devices in a coverage area of the relay device.

48. The apparatus according to claim 47, wherein the fourth access and mobility management function network element is an access and mobility management function network element that supports communication with the relay device.

49. The apparatus according to claim 47 or 48, wherein if the seventh non-access stratum message carries an inventory identifier, and the second non-access stratum message carries the inventory identifier,
the processing unit is configured to determine, based on the inventory identifier, that the second non-access stratum message is a response message corresponding to the seventh non-access stratum message.

50. The apparatus according to any one of claims 47 to 49, wherein the tenth non-access stratum message further carries inventory indication information, and the inventory indication information comprises at least one of the following content: a value interval of the identifier of the terminal device, an identifier list of the terminal device, an identifier of a group of the terminal device, or information indicating to query for an identifier of any terminal device; and
if the processing unit determines that the identifier of the first terminal device meets at least one of the indication information, the processing unit determines that the second non-access stratum message is the response message corresponding to the seventh non-access stratum message.

51. The apparatus according to any one of claims 47 to 50, wherein the tenth non-access stratum message further carries second indication information, and the second indication information indicates to perform a target operation on the first terminal device;
the transceiver unit is configured to send a third non-access stratum message to the fourth access and mobility management function network element, wherein the third non-access stratum message carries the second indication information; and
the transceiver unit is configured to receive a fourth non-access stratum message from the third access and mobility management function network element, wherein the fourth non-access stratum message carries information about an execution result corresponding to the target operation of the first terminal device, and the fourth non-access stratum message is sent by the first terminal device to the third access and mobility management function network element via the relay device.

52. The apparatus according to any one of claims 47 to 51, wherein
the transceiver unit is configured to send third indication information to the fourth access and mobility management function network element, wherein the third indication information indicates at least one of the following content:
indicates that the target operation is completed on the first terminal device, indicates to query for an identifier of a next terminal device, or indicates the terminal device to perform a next random access procedure; and
the transceiver unit is configured to receive a fifth non-access stratum message from the third access and mobility management function network element, wherein the fifth non-access stratum message carries an identifier of a second terminal device, and the fifth non-access stratum message is sent by the second terminal device to the third access and mobility management function network element via the relay device.

53. The apparatus according to any one of claims 47 to 52, wherein
the transceiver unit is configured to receive a ninth non-access stratum message from the fourth access and mobility management function network element, wherein the ninth non-access stratum message comprises information about an execution result corresponding to the target operation performed on the terminal.

54. The apparatus according to any one of claims 47 to 53, wherein the apparatus is a tag management function network element.

55. A communication system, comprising a relay device, a first access and mobility management function network element, and a first radio access network device, wherein
the relay device is configured to perform the method according to any one of claims 1 to 5;
the first access and mobility management function network element is configured to perform the method according to any one of claims 6 to 12;
the first radio access network device is configured to receive a first radio resource control message from the relay device, wherein the first radio resource control message carries a registration request message and first indication information, the first indication information indicates that the relay device supports communication with an ambient internet of things terminal device, and the registration request message is used to request to register with an access and mobility management function network element;
the first radio access network device is configured to select, for the relay device based on the first indication information, the first access and mobility management function network element that supports communication with the ambient terminal device; and
the first radio access network device is configured to send the registration request message to the first access and mobility management function network element.

56. The communication system according to claim 55, wherein
the first radio access network device is further configured to receive a first non-access stratum message from the first access and mobility management function network element, wherein the first non-access stratum message is used to request to obtain an identifier of a terminal device, and the terminal device comprises one or more terminal devices;
the first radio access network device is configured to send the first non-access stratum message to the relay device;
the first radio access network device is configured to receive a second non-access stratum message from the relay device, wherein the second non-access stratum message carries an identifier of a first terminal device, and the first terminal device is a terminal device that successfully performs random access and that is in terminal devices in a coverage area of the relay device; and
the first radio access network device is configured to determine to send the second non-access stratum message to the first access and mobility management function network element.

57. A communication system, comprising a third access and mobility management function network element, a fourth access and mobility management function network element, and a second network element, wherein
the third access and mobility management function network element and the fourth access and mobility management function network element are configured to perform the method performed by the third access and mobility management function network element and the fourth access and mobility management function network element according to any one of claims 13 to 19; and
the second network element is configured to perform the method according to any one of claims 20 to 27.

58. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and through a logic circuit or by executing code instructions, the processor is configured to implement the method according to any one of claims 1 to 5, is configured to implement the method according to any one of claims 6 to 12, is configured to implement the method performed by the fourth access and mobility management function network element according to any one of claims 13 to 19, or is configured to implement the method according to any one of claims 20 to 27.

59. A communication apparatus, comprising a processor, wherein the processor is coupled to a memory, the memory is configured to store instructions, and when the instructions are executed by the processor, the communication apparatus is enabled to perform the method according to any one of claims 1 to 5, is configured to implement the method according to any one of claims 6 to 12, is configured to implement the method performed by the fourth access and mobility management function network element according to any one of claims 13 to 19, or is configured to implement the method according to any one of claims 20 to 27.

60. A computer-readable storage medium, wherein the storage medium stores instructions, and when the instructions are executed by a communication apparatus, the method according to any one of claims 1 to 5 is implemented, the method according to any one of claims 6 to 12 is implemented, the method performed by the fourth access and mobility management function network element according to any one of claims 13 to 19 is implemented, or the method according to any one of claims 20 to 27 is implemented.

61. A computer program product, wherein when the computer program product runs on a computer, the computer is enabled to perform the method according to any one of claims 1 to 5, is configured to implement the method according to any one of claims 6 to 12, is configured to implement the method performed by the fourth access and mobility management function network element according to any one of claims 13 to 19, or is configured to implement the method according to any one of claims 20 to 27.
